# EUROPEAN PATENT APPLICATION

(11) **EP 4 708 230 A1**
(43) Date of publication of application: **11.03.2026**
(21) Application number: 24861715.1
(22) Date of filing: 25.07.2024
(51) Int. Cl.: G06V 40/12, G06V 40/10

(54) **IDENTITY RECOGNITION METHOD AND APPARATUS, DEVICE, MEDIUM AND PROGRAM PRODUCT**

(30) Priority: 06.09.2023 CN 202311149538
(71) Applicant: Tencent Technology (Shenzhen) Company Limited, Shenzhen, Guangdong 518057 (CN)
(72) Inventor: ZHANG, Zhenhong, Shenzhen, Guangdong 518057 (CN)
(74) Representative: EP&C
(86) International application number: PCT/CN2024/107525
(87) International publication number: WO 2025/050870

(57) **Abstract**

Provided in the embodiments of the present application are an identity recognition method and apparatus, a device, a medium, and a program product. The method comprises: acquiring an feature map sequence of biological features; performing feature extraction processing on each biological feature map of a plurality of biological feature maps to obtain a feature vector of each biological feature map; performing fusion processing on the feature vector of each biological feature map to generate a fused feature vector; and, on the basis of the fused feature vector, performing identity recognition on the biological features so as to obtain a recognition result. Using the embodiments of the present application can extract richer feature information of the biological features, thereby improving the recognition accuracy and reliability of a subject to which the biological features belong.

## Description

### RELATED APPLICATION

This application claims priority to Chinese Patent Application No. 202311149538.4, filed with the China National Intellectual Property Administration on September 6, 2023, and entitled "IDENTITY RECOGNITION METHOD AND APPARATUS, DEVICE, MEDIUM, AND PROGRAM PRODUCT", which is incorporated herein by reference in its entirety.

### FIELD OF THE TECHNOLOGY

This application relates to the field of computer technologies, and in particular, to an identity recognition method, an identity recognition apparatus, a computer device, a computer-readable storage medium, and a computer program product.

### BACKGROUND OF THE DISCLOSURE

With the progress of science and technology, biometric feature recognition is applied to various service scenarios, to improve the use convenience of the service scenarios. For example, in a service scenario of transportation, a biometric feature, such as the palm print or face, of a user can be configured for identity recognition and authentication to improve convenience during transportation.

At present, when a feature recognition system performs biometric feature acquisition on a user, acquired biometric feature maps may often have quality problems due to various reasons. For example, the biometric feature maps may have problems such as low definition, low resolution, or incomplete feature acquisition, which makes it difficult to accurately recognize, based on such low-quality maps, an identity to which a biometric feature belongs, resulting in reduced reliability of a recognition result.

### SUMMARY

Embodiments of this application provide an identity recognition method and apparatus, a device, a medium, and a program product, so that more redundant feature information of a biometric feature can be extracted to improve accuracy and reliability of recognition of an identity to which the biometric feature belongs.

According to an aspect, an embodiment of this application provides an identity recognition method, performed by a computer device. The method includes:
obtaining a feature map sequence of a biometric object performing an action, the feature map sequence including a plurality of biometric feature maps of the biometric object; and
performing feature extraction on each of the plurality of biometric feature maps to obtain a corresponding feature vector representing the biometric object from a plurality of semantic dimensions of the respective biometric feature map, each semantic dimension of the feature vector corresponding to a quantitative description of a pre-defined attribute of the biometric feature map;
fusing feature vectors of the plurality of biometric feature maps to generate a fused feature vector representing feature information of the biometric object from the plurality of semantic dimensions of the feature map sequence; and
performing identity recognition of the biometric object using the fused feature vector to obtain a recognition result indicating an identity of the biometric object.

According to another aspect, an embodiment of this application provides an identity recognition apparatus, configured in a computer device. The apparatus includes:
an obtaining unit, configured to obtain a feature map sequence of a biometric object performing an action, the feature map sequence including a plurality of biometric feature maps of the biometric object; and
a processing unit, configured to perform feature extraction on each of the plurality of biometric feature maps to obtain a corresponding feature vector representing the biometric object from a plurality of semantic dimensions of the respective biometric feature map, each semantic dimension of the feature vector corresponding to a quantitative description of a pre-defined attribute of the biometric feature map;
the processing unit being further configured to fuse feature vectors of the plurality of biometric feature maps to generate a fused feature vector representing feature information of the biometric object from the plurality of semantic dimensions of the feature map sequence; and
the processing unit being further configured to perform identity recognition on the biometric object based on the fused feature vector to obtain a recognition result, the recognition result indicating an identity to which the biometric object belongs.

According to another aspect, an embodiment of this application provides a computer device. The computer device includes:
a processor, configured to load and execute a computer program; and
a computer-readable storage medium, having a computer program stored therein, the computer program, when executed by a processor, implementing the identity recognition method.

According to another aspect, an embodiment of this application provides a computer-readable storage medium, having a computer program stored therein. The computer program is adapted to be loaded by a processor and perform the foregoing identity recognition method.

According to another aspect, an embodiment of this application provides a computer program product, including a computer program. When the computer program is executed by a processor, the foregoing identity recognition method is implemented.

In the embodiments of this application, continuous acquisition of biometric features of a user is supported, to obtain a feature map sequence of the biometric feature. The feature map sequence includes a plurality of biometric feature maps obtained by continuously capturing the biometric feature, and in the plurality of biometric feature maps, according to an order of continuous acquisition, a change in features of the biometric feature between any two adjacent biometric feature maps is continuous. That is, in this embodiment of this application, it can be ensured that a biometric feature sequence formed by the plurality of biometric feature maps included in the feature map sequence according to the acquisition order is a continuous action process when the user executes the target action (for example, a palm swiping action/a palm swiping behavior), thereby ensuring continuity of the biometric features included in the plurality of biometric feature maps in the feature map sequence. Further, feature extraction is performed on the plurality of biometric feature maps in the feature map sequence, to obtain a feature vector of each biometric feature map. A feature vector of any biometric feature map expresses sub-feature information of the biometric feature from a semantic dimension of the biometric feature map. For example, if a biometric feature is a palm, and the palm in a biometric feature map is tilted, then a feature vector in the biometric feature map represents a palm print characteristic when the palm is tilted. Further, feature vectors of all the biometric feature maps are fused, to generate a fused feature vector. The fused feature vector represents comprehensive feature information of the biometric feature from a semantic dimension of the feature map sequence. Identity recognition is performed based on the fused feature vector of the biometric feature to obtain a recognition result indicating an object to which the biometric feature belongs. Because the fused feature vector of the biometric features is obtained through analysis from various dimensions of the biometric feature included in different biometric feature maps, comprehensiveness of the comprehensive feature information is relied on, thereby effectively improving accuracy of identity recognition. It can be learned from the foregoing solution that, the embodiments of this application provide a novel biometric object acquisition and recognition solution, in which a plurality of biometric feature maps can be continuously acquired in a process of executing a target action by a user to form an feature map sequence, and continuity of a change in features of the biometric feature between adjacent biometric feature maps in the feature map sequence can be ensured. In this way, comprehensive feature information of the biometric feature is obtained based on a plurality of continuous, comprehensive, and abundant biometric feature maps, to perform identity recognition by using the comprehensive feature information, which, compared with performing identity recognition based on a feature vector of a single biometric feature map, effectively improves accuracy and reliability of a biometric feature for identity recognition, thereby improving accuracy of identity recognition.

### BRIEF DESCRIPTION OF THE DRAWINGS

FIG. 1 is a schematic structural diagram of a feature recognition system according to an exemplary embodiment of this application.
FIG. 2 is a schematic architectural diagram of a service system according to an exemplary embodiment of this application.
FIG. 3 is a schematic flowchart of an identity recognition method according to an exemplary embodiment of this application.
FIG. 4 is a schematic diagram of acquiring a video stream for a biometric feature according to an exemplary embodiment of this application.
FIG. 5 is a schematic diagram of identifying biometric feature maps forming an action sequence from a video stream according to an exemplary embodiment of this application.
FIG. 6 is a schematic flowchart of feature extraction and feature fusion according to an exemplary embodiment of this application.
FIG. 7 is a schematic flowchart of another identity recognition method according to an exemplary embodiment of this application.
FIG. 8 is a schematic flowchart of performing image quality optimization on a biometric feature map according to an exemplary embodiment of this application.
FIG. 9 is a schematic structural diagram of an identity recognition apparatus according to an exemplary embodiment of this application.
FIG. 10 is a schematic structural diagram of a computer device according to an exemplary embodiment of this application.

### DESCRIPTION OF EMBODIMENTS

The embodiments of this application relate to a biometric feature recognition technology. The biometric feature recognition technology refers to a technology in which a computer device performs identity recognition or authentication by using an inherent biometric feature (also referred to as biometric object) of a living creature. The inherent biometric feature of the living creature may refer to a biometric feature on the body of the living creature (for example, a body part on the body of the living creature), and the biometric feature may include, but is not limited to, a palm print, a fingerprint, the face, an iris, a retina, and the like. A biometric feature of each living creature has uniqueness, and therefore, identity recognition on a living creature can be implemented based on the biometric feature. For example, palm print recognition is a recognition technology that implements identity recognition by using a palm print feature of a palm (or a sole) of a living creature. Using a palm of a living creature as an example, a palm print of the palm of the living creature refers to a palm feature from the fingertips to the wrist. There are many features in the palm feature of the living creature that can be configured for identity recognition. For example, palm print recognition may be implemented by using main lines of the palm print, wrinkles of the palm print, a texture of the palm print, bifurcation points of the palm print, or the like shown in the palm. In another example, iris recognition refers to a recognition technology of performing identity recognition based on an iris (that is, a flat circular ring-shaped membrane in a middle layer of an eyeball wall) in an eye. This is mainly because the iris is a characteristic that keeps unchanged throughout the life course, which determines the uniqueness of the iris feature.

Whether a living creature to which a biometric feature belongs is specifically an animal or a human is not limited in the embodiments of this application. In an actual application, types of living creatures to which a biometric feature belongs are different according to different application fields of the biometric feature recognition technology. For example, in the field of wild animal recognition, the living creature involved in the embodiments of this application refers to an animal. In this case, the biometric feature involved in the embodiments of this application belongs to an animal. For ease of description, in the embodiments of this application, subsequent content is described by using an example in which the biometric feature is a palm print, and the living creature to which the biometric feature belongs is a human being.

Further, with the development of biometric feature recognition technologies, non-invasive biometric feature recognition technologies also emerge. The non-invasiveness of biometric feature recognition means that for a living creature, an entire process of acquiring and recognizing a biometric feature of the living creature is in a non-contact manner, and even is imperceptible or silent. The non-contact biometric feature acquisition and recognition manner has lower requirements on device performance of an acquisition and recognition device, and does not require direct contact with a living creature, and can implement rapid acquisition and recognition of a plurality of biometric features in a short time, thereby having higher recognition efficiency. However, it is found in practice that the non-contact biometric feature acquisition and recognition manner may cause poor quality of an acquired biometric feature due to various reasons, resulting in greatly degraded accuracy and reliability of identity recognition. For example, during palm print recognition, if a palm print of a user is acquired from a long distance, due to the long distance, there are problems such as low resolution of an acquired palm print image and low definition of a palm print included in the palm print image. As a result, performing identity recognition based on the palm print image with low resolution and low definition inevitably causes poor reliability of an identity recognition result.

To improve reliability of biometric features and ensure accuracy of identity recognition, an embodiment of this application provides an identity recognition solution. The solution improves accuracy and reliability of biometric feature recognition by combining technologies such as continuous acquisition of a video stream and feature fusion. Specifically, a general process of the solution may include:

An action sequence (also referred to as feature map sequence) of a biometric feature (i.e., biometric object) is obtained. The action sequence is obtained by an acquisition device (also referred to as a capturing device) through automatic acquisition when a user executes a target action in front of the acquisition device. For example, the action sequence is obtained by a palm print acquisition device by automatically acquiring a continuous palm swiping action when the user executes the palm swiping action in front of the palm print acquisition device. In addition, the action sequence includes a plurality of biometric feature maps obtained through continuous acquisition of a biometric feature, and a change in features of the biometric feature between any two adjacent biometric feature maps in the plurality of biometric feature maps acquired continuously is continuous. That is, a change in biometric features presented by two adjacent biometric feature maps is orderly (according to an execution order of the target action). Feature extraction is performed on each biometric feature map in a plurality of biometric feature maps included in the action sequence, to obtain a feature vector of the biometric feature map. A feature vector of any biometric feature map expresses sub-feature information (e.g., attributes) of the biometric feature from a plurality of semantic dimensions of the biometric feature map. That is, the feature vector of each biometric feature map represents the biometric object from a plurality of semantic dimensions of the respective biometric feature map, and each semantic dimension of the feature vector is corresponding to a quantitative description of a pre-defined attribute of the biometric feature map. Feature vectors of all the biometric feature maps in the plurality of biometric feature maps are fused to generate a fused feature vector. Compared with a feature vector of a single biometric feature map, the fused feature vector represents comprehensive feature information of the biometric feature from the plurality of semantic dimensions of the action sequence. Identity recognition is performed on the biometric feature based on the comprehensive fused feature vector to obtain a recognition result with higher accuracy. The recognition result indicates an identity of the biometric object. A set of semantic dimensions is a dimensional system for conducting semantic-level classification and quantification of data or features, which decomposes feature information into independent dimensions with pre-defined semantic meanings (such as morphology, behavioral pattern, spatial distribution, or the like) to form a representation of the feature through the combination of multiple semantic dimensions.

In view of this, in the embodiments of this application, a continuous action process of executing a target action by a biometric feature of a user can be continuously acquired, to obtain a plurality of biometric feature maps acquired continuously. Each biometric feature map includes biometric features, and a change in features of the biometric feature between adjacent biometric feature maps in the plurality of biometric feature maps is continuous. In this way, by using feature complementarity (or feature completeness, continuity of the change in features, and the like) between the plurality of biometric feature maps acquired continuously, a more redundant and comprehensive fused feature vector of the biometric feature is obtained through superposition, and identity recognition is performed based on the fused feature vector, which, compared with performing identity recognition based on a feature vector of a single biometric feature map, effectively improves accuracy and reliability of a biometric feature, so that when identity recognition is performed by using a reliable biometric feature, accuracy of identity recognition can be greatly improved. In addition, the recognition solution provided in the embodiments of this application is not limited by a distance between a user and an acquisition device. Even if a biometric feature of the user is acquired at a long distance, comprehensive feature information of the biometric feature can be obtained by relying on acquisition of a video stream of the biometric object performing the action, thereby effectively filling the technical gap in the field of long-distance feature acquisition, providing effective support for applications of biometric feature recognition technologies, providing reliable support for biometric feature recognition applications in fields such as security authentication, and bringing higher-level security and convenience to the society.

Based on the foregoing brief description of the identity recognition solution provided in the embodiments of this application, the following further need to be described:
(1) The identity recognition solution provided in the embodiments of this application may be deployed in a feature recognition system (or platform) having biometric feature acquisition and recognition functions.

The feature recognition system may be an application supporting biometric feature acquisition and recognition. The application may be a computer program implementing one or more specific tasks. Applications are classified according to different dimensions (such as running manners and functions of the applications), and types of the same application in different dimensions can be obtained. For example, as classified according to running manners of the applications, the applications may include, but are not limited to, a client installed in a terminal, a mini program (as a subprogram of the client) that can be used without being downloaded and installed, a World Wide Web (web) application opened through a browser, and the like. In another example, as classified according to function types of the applications, the applications may include, but are not limited to, an Instant Messaging (IM) application, a content interaction application, and the like. The IM application refers to an Internet-based application for instant message exchange and social interaction. The IM application may include, but is not limited to, a social application with a communication function, a map application with a social interaction function, a game application, and the like. The content interaction application refers to an application that can implement content interaction, and may be, for example, an application such as an online bank, a sharing platform, a personal space, or news.

Further, the feature recognition system may also be a plug-in (or function) included in an application, the plug-in having functions of acquiring and recognizing a biometric feature. For example, if the application is an IM application, the feature recognition system may be a biometric feature acquisition and recognition plug-in included in the IM application. For example, during a session performed by a user by using an IM application, if biometric feature acquisition and recognition need to be performed, a biometric feature acquisition and recognition plug-in may be directly invoked from the IM application, to implement functions of acquiring and recognizing the biometric feature. In this way, a user (for example, any object using the IM application) can still implement functions, such as acquiring and recognizing a biometric feature, during social interaction using the IM application, without application jumping (for example, jumping from the IM application to an independent biometric feature acquisition and recognition application).

(2) The recognition solution provided in the embodiments of this application may be applied to any service scenario in which biometric feature acquisition and recognition need to be performed. Fields related to the service scenario may include, but are not limited to, a security field, a transportation field, an education field, a payment field, a personal identity authentication scenario, and the like. An example in which a biometric feature map is a palm map of a palm of an object executing a target action, a biometric feature included in the biometric feature map is a palm print feature (or a palm print for short), and a service scenario is a long-distance palm swiping scenario is used. Exemplary service scenarios in different fields may include, but are not limited to, the following:

In one embodiment, a service scenario in the security field may include a security access control scenario. In a security access control scenario, a user about to enter a company may execute a palm swiping behavior while standing at a fixed position or walking at a long distance. In this case, an acquisition device (that is, a computer device on which an identity recognition solution (or a feature recognition system deployed in the identity recognition solution) provided in the embodiments of this application is deployed) may continuously acquire the palm swiping behavior, to obtain a video stream. The video stream includes a plurality of video frames obtained by continuously acquiring the palm swiping behavior by the acquisition device. One video frame corresponds to one biometric feature map. Feature extraction and feature fusion are performed on a plurality of continuous biometric feature maps included in the video stream, and when it is determined, based on a fused feature vector obtained after feature fusion, that an acquired palm print is a palm print of an employee of the company, the user is allowed to enter the company.

In one embodiment, a service scenario in the transportation field may include a ticket checking scenario. In a ticket checking scenario, a user about to enter a station may execute a palm swiping behavior while standing at a fixed position or walking at a long distance. In this case, an acquisition device allows the user to enter the station only when detecting that the user to which the acquired palm print belongs has purchased a ticket and the ticket has not been used.

In one embodiment, a service scenario in the education field may include a check-in scenario. In a check-in scenario, before giving a class, a teacher may execute a palm swiping behavior while standing at a fixed position or walking at a long distance. In this case, an acquisition device may associate and record an acquired palm print and a teacher, which is specifically recognizing, based on an acquired palm print, the teacher to which the palm print belongs, associating and recording the teacher and this palm print behavior, and recording a class giving behavior of the teacher in time.

In one embodiment, a service scenario in the payment field includes an offline money transfer scenario. In an offline money transfer scenario, a consumer may execute a palm swiping behavior while standing at a fixed position or walking at a long distance. In this case, after acquiring a palm print of the consumer, an acquisition device may find an account of the consumer from a database based on the palm print, deduct a resource amount corresponding to a commodity purchased by the consumer from a resource pool corresponding to the account of the consumer, and add a resource amount corresponding to the commodity purchased by the consumer to a resource pool of a store (that is, a to-be-paid user), to implement secure payment.

It is considered that procedures and principles of acquiring and recognizing a biometric feature in various biometric feature recognition scenarios (or service scenarios) by using the identity recognition solution provided in the embodiments of this application are similar, and only types of biometric features related to different recognition scenarios may be different. Therefore, the foregoing merely describes general acquisition and recognition principles in various service scenarios, and the related descriptions of the various service scenarios do not limit the embodiments of this application. For example, the service scenario in the security field may further include a detection scenario. For example, in a detection scenario, a video stream acquired by an acquisition device usually has low resolution. If feature recognition is performed based on only a single biometric feature map in the video stream, accuracy and reliability of the recognition are low. Therefore, feature vectors of a plurality of biometric feature maps may be fused by using the recognition solution provided in the embodiments of this application, to obtain a fused feature vector. In this way, it is easier to recognize an identity of a user based on a comprehensive and all-round fused feature vector.

In view of this, compared with a conventional solution in which a user needs to continuously adjust a distance between the user and an acquisition device, and further needs to adjust an acquisition angle after standing at a fixed position, to help the acquisition device acquire a biometric feature map with good quality, the identity recognition solution provided in the embodiments of this application does not require a user keep still in a biometric feature acquisition and recognition process, and also does not limit a distance between the user and the acquisition device, thereby effectively improving a speed and efficiency of biometric feature acquisition and recognition while ensuring accuracy and reliability of biometric feature recognition.

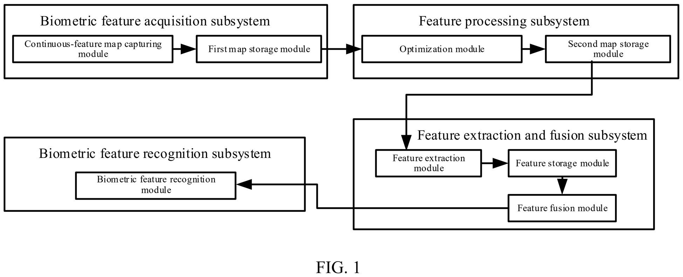

(3) An application structure of a feature recognition system involved in the embodiments of this application may include, but is not limited to, four parts. As shown in FIG. 1, the four parts are respectively a biometric feature acquisition subsystem, a feature processing subsystem, a feature extraction and fusion subsystem, and a biometric feature recognition subsystem.
① The biometric feature acquisition subsystem has a video stream multi-feature map acquisition function. The video stream multi-feature map acquisition function refers to a technology of continuously acquiring a plurality of biometric feature maps in a form of a video stream. More palm print information is obtained through continuous acquisition, thereby improving efficiency and accuracy of the acquisition. The biometric feature acquisition subsystem includes: a video stream-based continuous-feature map capturing module and a first map storage module. The continuous-feature map capturing module is intended to continuously collect, by using a dedicated action camera, a video stream of a palm swiping behavior of a user, that is, obtain, through continuous acquisition, a plurality of biometric feature maps during a palm swiping action by using a technology of continuously acquiring a plurality of palm print images by using a video stream. The plurality of biometric feature maps includes abundant palm print information, thereby improving efficiency and accuracy of palm print acquisition. The first map storage module is mainly configured to store continuous biometric feature maps in a video stream.
② The feature processing subsystem includes: an optimization module and a second map storage module. The optimization module may optimize low-resolution images in the plurality of successive biometric feature maps, for example, by using a super-resolution algorithm. The second map storage module is configured to store the optimized biometric feature maps. The super-resolution technology is a technology that improves image resolution by using an image processing algorithm, and can restore a clearer and more detailed high-resolution image from a low-resolution image, thereby improving image quality and recognition accuracy.
③ The feature extraction and fusion subsystem includes: a feature extraction module, a feature storage module, and a feature fusion module. The feature extraction module is configured to perform feature extraction on each biometric feature map. The feature storage module is configured to store a feature vector of each biometric feature map after feature extraction. The feature fusion module has a feature fusion function. Feature fusion (or referred to as fusion processing) refers to fusing feature vectors of a plurality of biometric feature maps to form a more comprehensive and more accurate feature representation. That is, the feature fusion module is configured to fuse feature vectors of a plurality of biometric feature maps, to obtain a more complete and abundant comprehensive feature. By comprehensively using features of a plurality of biometric feature maps, performance and robustness of a feature recognition system can be improved, to enhance capabilities of recognizing and authenticating an individual.
④ The biometric feature recognition subsystem has a biometric feature recognition technology. For example, the palm print recognition technology refers to a technology of performing individual recognition by using characteristics such as a form and texture of a palm print. By analyzing and comparing characteristics of a palm print image, confirmation and authentication on a personal identity are implemented, which has uniqueness, stability, and high reliability. The biometric feature recognition subsystem includes a biometric feature recognition module. The biometric feature recognition module is mainly configured to perform palm print recognition based on the fused feature vector, to obtain a recognition result.

The following describes general content of performing biometric feature recognition by using the modules in the application structure of the feature recognition system. When there is a demand of acquiring and recognizing a biometric feature of an object, the biometric feature of the user (that is, the object) is continuously acquired by using the biometric feature acquisition subsystem (specifically, the continuous-feature map capturing module deployed in the subsystem), to capture a video stream. In addition, a plurality of biometric feature maps with continuity in the video stream are cached through the biometric feature acquisition subsystem (specifically, the first map storage module deployed in the subsystem) The feature processing subsystem (specifically, the optimization module deployed in the subsystem) optimizes the plurality of biometric feature maps acquired, for example, by using a super-resolution algorithm. In addition, the optimized biometric feature maps are stored by using the feature processing subsystem (specifically, the second map storage module deployed in the subsystem). The feature extraction and fusion subsystem (specifically, the feature extraction module deployed in the subsystem) performs feature extraction on each optimized biometric feature map, to obtain a feature vector of the biometric feature map. In addition, the feature extraction and fusion subsystem (specifically, the feature storage module deployed in the subsystem) caches the feature vector of the biometric feature map. In addition, the feature extraction and fusion subsystem (specifically, the feature fusion module deployed in the subsystem) fuses feature vectors of all the biometric feature maps, to generate a fused feature vector. The palm print recognition subsystem (specifically, the biometric feature recognition module deployed in the subsystem) implements recognition on the biometric feature based on the fused feature vector to obtain a recognition result, the recognition result indicating an identity to which the biometric feature belongs.

The modules included in the feature recognition system are not limited to the foregoing provided modules. For example, a continuity determining module is further deployed in the feature acquisition subsystem. The continuity determining module has a function of performing initialization on the video stream. The initialization may include, but is not limited to: determining whether a change in features of the biometric object between each pair of biometric feature maps in the plurality of biometric feature maps is continuous; and determining the feature map sequence as a plurality of successive biometric feature maps having continuous changes in features from the plurality of biometric feature maps. For example, The initialization may determine continuity of the biometric features between adjacent biometric feature maps included in the video stream (for example, determining whether a current biometric feature map is a next biometric feature map of a preceding biometric feature map in a coherent target action process performed by the object), to ensure continuity of the biometric features among a plurality of biometric feature maps. In this way, all-round comprehensive feature information of the biometric feature can be obtained subsequently by using the continuity. In addition, operations, such as archiving, are perform, according to a sequence number of an action order, on the biometric feature maps after the continuity determining. Certainly, the function of the continuity determining module may also be combined into the biometric feature acquisition subsystem provided above, or combined into the feature processing subsystem. The embodiments of this application do not limit whether the continuity determining module exists alone, or the function of the continuity determining module is combined into another module. Further, when the continuity determining module uses a deep learning model to determine the continuity, a biometric feature map may be added into an interference data set when a change in features of the biometric object between the biometric feature map and an adjacent biometric feature map preceding the biometric feature map is discontinuous, the interference data set is used in training the deep learning model.

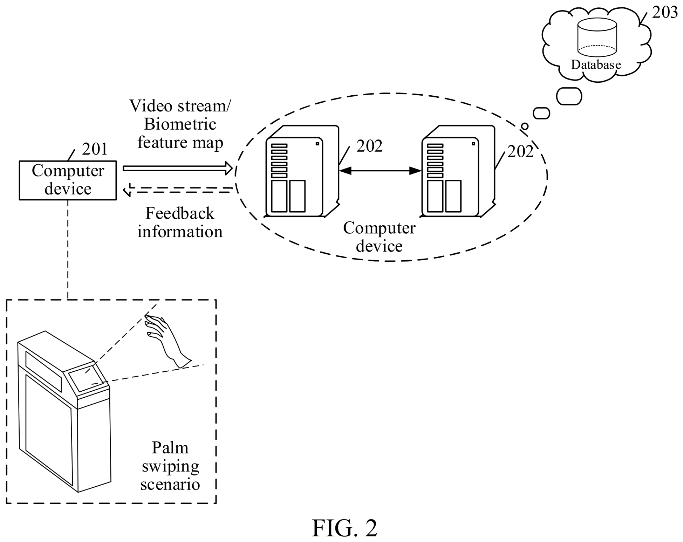

(4) The identity recognition solution provided in the embodiments of this application may be performed by a computer device. A quantity and types of computer devices are not limited in the embodiments of this application. FIG. 2 is a schematic architectural diagram of a service system according to an exemplary embodiment of this application. As shown in FIG. 2, the service system includes a computer device 201 and a computer device 202. Quantities and names of the computer device 201 and the computer device 202 are not limited in the embodiments of this application.
① The computer device 201 may be a device having a biometric feature acquisition function. Specifically, the biometric feature acquisition subsystem shown in FIG. 1 is deployed in the computer device 201. The computer device may be a terminal device directly interacting with a user. The terminal device may include, but is not limited to, a device such as a smartphone (for example, a smartphone deployed with an Android system or a smartphone deployed with an internetworking operating system (IOS)), a tablet computer, a portable personal computer, a mobile Internet device (MID), a vehicle-mounted device, a head-mounted device, and the like. Types of terminal devices are not limited in the embodiments of this application. Explanation is given hereby.
② The computer device 202 is a server corresponding to the computer device 201, and is configured to interact with the computer device 201, to implement computing and application service support provided for a video stream transmitted by the computer device 201. The server may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. Further, a feature processing subsystem and a feature extraction and fusion subsystem are deployed in the server. In this way, after receiving a video stream acquired by the computer device 201, the server may pre-process the video stream by using the feature processing subsystem, so that the pre-processed video stream is more suitable for subsequent operations, thereby improving quality of pre-processed biometric feature maps. The feature extraction and fusion subsystem in the server is configured to perform feature extraction on the pre-processed biometric feature maps to obtain feature vectors of the biometric feature maps and fuse feature vectors of a plurality of biometric feature maps to generate a fused feature vector that can comprehensively represent characteristics of the biometric feature.

Still further, the server further includes a biometric feature recognition subsystem and a database 203 (or referred to as a biometric feature data set). The database 203 may be configured to store candidate feature information of biometric features of different identities (that is, users). In this way, after obtaining the fused feature vector of the biometric feature, the server may perform recognition on the biometric feature by using the biometric feature recognition subsystem. Specifically, the server finds, from the database 203 by using the fused feature vector of the biometric feature, candidate feature information matching (or the same as) comprehensive feature information indicated by the fused feature vector of the biometric feature, to use an identity to which the candidate feature information belongs as an identity to which the to-be-recognized biometric feature belongs, thereby achieving identity recognition for the object. In addition, if the computer device 201 only needs to receive feedback information from the computer device 202 to allow the user to pass (for example, in a security access control scenario), after obtaining a recognition result, the computer device 202 further returns feedback information to the computer device 201 according to the recognition result. The feedback information instructs the computer device 201 to respond (for example, open a door or prompt payment completion) to a palm swiping behavior (or another behavior) of the user.

Modules in the feature recognition system may be deployed in the computer device 201 or the computer device 202. For example, all modules are deployed on the computer device 201 or deployed on the computer device 202, or some modules are deployed on the computer device 201 and other modules are deployed on the computer device 202. According to different deployment positions of modules in the feature recognition system, execution bodies of the identity recognition solution provided in the embodiments of this application are different. For example, when all the modules are deployed on the computer device 201 (or the computer device 202), the identity recognition solution is executed by the computer device 201 (or the computer device 202). In another example, when some modules are deployed on the computer device 201, and other modules are deployed on the computer device 202, the identity recognition solution is executed by the computer device 201 and the computer device 202. FIG. 2 is described by using an example in which the identity recognition solution is jointly performed by the computer device 201 and the computer device 202. In an actual application, when the computer device 201 has a biometric feature recognition function, that is, when all the modules in the feature recognition system are deployed on the computer device 201, the system shown in FIG. 2 may include only the computer device 201. In this case, the identity recognition solution provided in the embodiments of this application may be executed by only the computer device 201. Similarly, when all the modules in the feature recognition system are deployed on the computer device 202, the system shown in FIG. 2 includes the computer device 201 and the computer device 202. In this case, the computer device 201 only acquires a video stream, and transmits the acquired video stream to the computer device 202, and the computer device 202 performs identity recognition based on the video stream.

(5) In the embodiments of this application, collection and processing of relevant data need to be strictly in accordance with requirements of relevant laws and regulations. Acquisition of personal information needs to be subject to the knowledge or consent of an individual subject (or have the legal basis for information acquisition), and subsequent data use and processing need to be carried out within the scope of authorization of laws and regulations and the subject of personal information. For example, when the embodiments of this application are applied to a specific product or technology, for example, when a biometric feature of a user is acquired, a permission or an approval from the user needs to be obtained. In addition, collection, use, and processing of the related data (for example, collection and publication of barrages posted by an object) need to comply with relevant laws, regulations, and standards of relevant regions.

According to the identity recognition solution described above, embodiments of this application provide a more detailed identity recognition method. The following describes, in detail with reference to the accompanying drawings, the identity recognition method provided in the embodiments of this application.

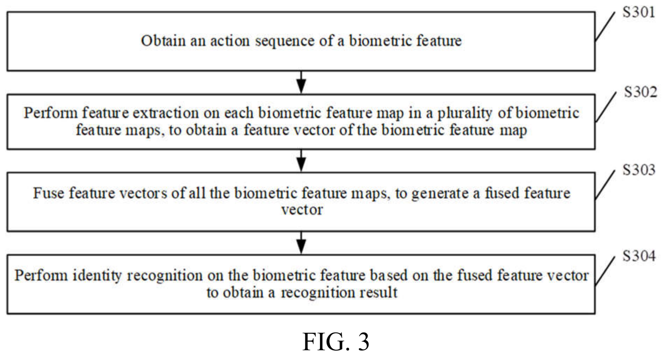

FIG. 3 is a schematic flowchart of an identity recognition method according to an exemplary embodiment of this application. The identity recognition method shown in FIG. 3 may be performed by a computer device, and the identity recognition method may include, but is not limited to, operations S301 to S304.

S301: Obtain an action sequence of a biometric feature.

The action sequence of the biometric feature (i.e., biometric object) includes a plurality of biometric feature maps acquired continuously for the biometric feature. In other words, the action sequence is a sequence obtained by sequentially arranging a plurality of biometric feature maps according to a chronological order in which the biometric feature maps are acquired. An action or style of the biometric feature included in each biometric feature map is different. If the biometric feature is a palm, a form of the biometric feature included in each biometric feature map in a plurality of biometric feature maps continuously acquired in a process in which the palm executes a target action is different. A change in features of the biometric feature between any two adjacent biometric feature maps in the plurality of biometric feature maps included in the action sequence is continuous. To be specific, it can be learned from the perspective of a change in features of the biometric feature between a plurality of biometric feature maps in the action sequence, a change of the biometric feature presented in the entire action sequence is continuous, and such continuity matches an action order of executing a coherent target action (such as a palm swiping action) by the biometric feature. For example, the action sequence includes a first biometric feature map and a second biometric feature map that are adjacent to each other. The first biometric feature map includes a first biometric feature presenting a first action, and the second biometric feature map includes a second biometric feature presenting a second action. Therefore, there is continuity of a change in features (or understood as an action change from the first action to the second action) between the first biometric feature and the second biometric feature. The continuity is reflected in coherence of actions (for example, a coherent action process from palm clenching to palm opening).

Depending on continuity (or coherence) of a change in features of the biometric feature between a plurality of biometric feature maps included in an action sequence, a more comprehensive and reliable fused feature vector of the biometric feature is obtained based on feature complementarity of the biometric feature included in the plurality of continuous biometric feature maps, so that performing identity recognition based on the fused feature vector can improve accuracy of identity recognition. Using an example in which the biometric feature is a palm print (or referred to as a palm print feature), continuity of a change in features of the palm print between a plurality of biometric feature maps included in an action sequence may be simply understood as that, according to a palm print pattern that a palm print appears in an acquirable range of an acquisition device (that is, an environmental range that can be acquired by the acquisition device) when a user performs a palm swiping behavior, the acquisition device first acquires fingertips of the palm, then acquires fingers of the palm, and then acquires a part of the palm until the complete palm is acquired. It can be learned that in a process in which the user performs a palm swiping behavior, a palm print change in features presented by the plurality of biometric feature maps acquired continuously needs to be from part to whole, and be presented as a continuous process.

In an actual application, if there is a need to perform biometric feature recognition on a user in a service scenario, an action sequence of a biometric feature of the user may be obtained, to implement subsequent processing, such as feature extraction, feature fusion, and feature recognition, based on the action sequence, to accurately recognize an identity of the user. A specific implementation process of obtaining an action sequence of a biometric feature of a user may include, but is not limited to, the following:
(1) When an acquisition device is in an active state, a biometric feature executing a target action is continuously acquired by using the acquisition device in a service scenario, to obtain a video stream of the biometric feature. In this case, the acquired video stream includes a plurality of initial biometric feature maps continuously captured. Each initial biometric feature map includes all or part of features of the biometric feature (for example, a full palm or a part of a palm (for example, including only fingers)). In other words, when the acquisition device is in an active state, a process of acquiring the video stream about the biometric feature by the acquisition device is similar to a process of continuously shooting a process of the biometric feature executing the target action. The acquired video stream reflects a continuous process or a coherent process of executing the target action by the biometric feature of the user.

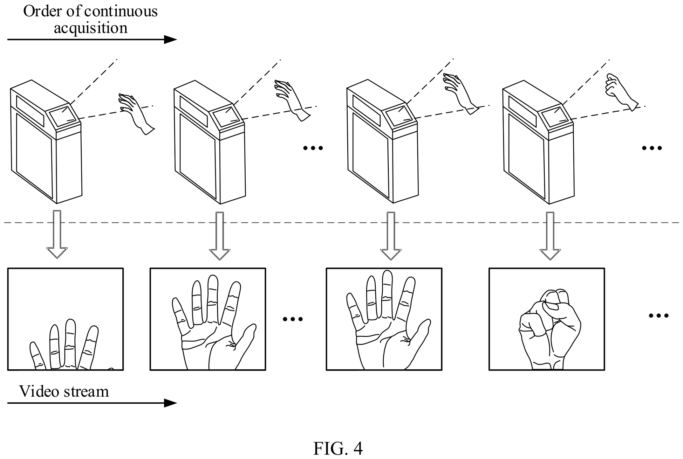

Using an example in which the biometric feature of the user is a palm print, when the acquisition device is in an active state, a whole continuous process in which the user performs a target action (such as a palm swiping action, or referred to as a palm swiping behavior) is captured, to obtain a video stream of the palm print of the user. As shown in FIG. 4, when the acquisition device is in an active state, as a user executes a palm swiping behavior, fingers of the user first appear in an acquisition scope of the acquisition device, and then the acquisition device first acquires an initial biometric feature map including fingertips of fingers of a palm. As the user continues performing the palm swiping behavior, the acquisition device acquires an initial biometric feature map including the fingers of the palm. Continuously, as the user continues performing the palm swiping behavior, the acquisition device acquires an initial biometric feature map including a part of the palm, and so on. N initial biometric feature maps acquired by the acquisition device are obtained until the acquisition device satisfies an acquisition stopping condition, N being an integer greater than 3 (in other cases, N may be an integer greater than 1). Then, it is determined that the video stream acquired by the acquisition device for the palm print of the user includes the N initial biometric feature maps.

Specific content of the acquisition device satisfying the acquisition stopping condition is not limited in the embodiments of this application. In one embodiment, the acquisition device starts timing when detecting the biometric feature of the user. After continuously acquiring the biometric feature for a target time period, the acquisition device automatically changes from an active state to an off state, to stop acquisition. If the target time period is 10 seconds, when detecting that the biometric feature of the user appears in the acquisition scope, the acquisition device starts acquisition and lasts for 10 seconds. Even if the biometric feature of the user leaves the acquisition scope within the 10 seconds, the acquisition device continuously performs acquisition. In one embodiment, when detecting that the biometric feature of the user falls within the acquisition scope, the acquisition device starts to acquire the biometric feature until the biometric feature leave the acquisition scope. In this case, the acquisition device stops the acquisition.

In view of the above, in the video stream obtained by continuously acquiring, by the acquisition device, the biometric feature executing the target action, a change in features of the biometric feature between adjacent different initial biometric feature maps in the plurality of initial biometric feature maps may be large. In this case, the change in features is neither continuous nor complementary. In this case, when subsequent feature fusion is performed based on the change in features that is neither continuous nor complementary, the obtained fused feature vector has low reliability. For example, when the user quickly changes from palm opening to palm clenching (for example, presented as making a fist), a change in features of the biometric feature between two adjacent initial biometric feature maps is excessively large, resulting in a poor subsequent feature fusion effect. In another example, when the palm print of the user is acquired, the user rapidly shakes the palm. Consequently, a change in features of the biometric feature between two adjacent initial biometric feature maps is excessively large, resulting in a poor subsequent feature fusion effect.

(2) A plurality of biometric feature maps having stronger continuity (that is, a plurality of initial biometric feature maps identified from the video stream) are separated from the video stream to form an action sequence, thereby improving continuity and reliability of a change in features of the biometric feature between the plurality of biometric feature maps in the action sequence. In the embodiments of this application, after the video stream of the biometric features is acquired, the plurality of initial biometric feature maps included in the video stream are preprocessed, to obtain the action sequence of the biometric feature, a change in features of the biometric feature among the plurality of biometric feature maps included in the action sequence has stronger continuity and complementarity.

Specific implementation logic of pre-processing a video stream to obtain an action sequence with stronger continuity may include, but is not limited to: In a service scenario, after a dedicated action camera is configured to continuously acquire a target action executed by a user to obtain a video stream, a change in features requirement of the service scenario is obtained. The change in features requirement specifies a requirement that needs to be satisfied by a change in features between a current initial biometric feature map that is in the video stream and that can be added to the action sequence and a preceding adjacent initial biometric feature map. It is sequentially determined, according to an order of the initial biometric feature maps included in the video stream, whether a change in features of the biometric feature between two adjacent initial biometric feature maps satisfies a change in features requirement of the service scenario. If the change in features satisfies the change in features requirement, the two adjacent initial biometric feature maps are added to the action sequence. If the change in features does not satisfy the change in features requirement, neither an initial biometric feature map located later in the two adjacent initial biometric feature maps nor an initial biometric feature map after the initial biometric feature map located later in the video stream is added to the action sequence.

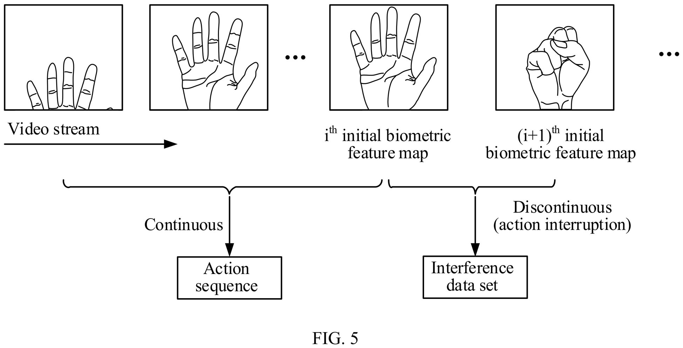

For example, using an example in which the video stream includes N initial biometric feature maps, N being an integer greater than 1, it is assumed that a change in features requirement of a service scenario may be that a change in features of the biometric feature between two adjacent initial biometric feature maps in the video stream is continuous. Therefore, as shown in FIG. 5, after a video stream is obtained by continuously acquiring, by using a dedicated action camera, a target action executed by a user, it is determined whether a change in features of the biometric feature between an (i+1)^{th} initial biometric feature map in the video stream and an i^{th} initial biometric feature map in the video stream is continuous, 1≤i<N, and i being an integer. If the change in features of the biometric feature between the (i+1)^{th} initial biometric feature map in the video stream and the i^{th} initial biometric feature map in the video stream is continuous, indicating that actions of the biometric feature between the i^{th} initial biometric feature map and the (i+1)^{th} initial biometric feature map are coherent, that is, the i^{th} initial biometric feature map and the (i+1)^{th} initial biometric feature map can be configured to implement feature fusion and recognition, the (i+1)^{th} initial biometric feature map is added to the action sequence of the biometric feature. In addition, it is further determined whether there is an (i+2)^{th} initial biometric feature map in the video stream (that is, it is determined whether the (i+1)^{th} initial biometric feature map is a last biometric feature map in the N initial biometric feature maps included in the video stream). If there is an (i+2)^{th} initial biometric feature map (that is, the (i+1)^{th} initial biometric feature map is not the last biometric feature map in the N initial biometric feature maps included in the video stream), it is further determined whether a change in features of the biometric feature between the (i+2)^{th} initial biometric feature map and the (i+1)^{th} initial biometric feature map is continuous until a candidate biometric feature map in the video stream is detected. The candidate biometric feature map includes: a last initial biometric feature map in the N initial biometric feature maps included in the video stream, or an initial biometric feature map that is in the N initial biometric feature maps and that has a discontinuous change in features of the biometric feature compared with a preceding adjacent initial biometric feature map.

Conversely, if the change in features of the biometric feature between the (i+1)^{th} initial biometric feature map in the video stream and the i^{th} initial biometric feature map in the video stream is discontinuous (as shown in FIG. 5, the palm included in the (i+1)^{th} initial biometric feature map is in a clenched state, and the palm included in the i^{th} initial biometric feature map is in an open state, so the two are discontinuous), indicating that the biometric feature included in the i^{th} initial biometric feature map, compared with the biometric feature included in the (i+1)^{th} initial biometric feature map, generates a large action change and is incoherent, and cannot be configured for feature fusion and recognition, the action sequence of the biometric feature is obtained. In this case, the action sequence includes i initial biometric feature maps in the video stream. The i initial biometric feature maps are initial biometric feature maps located before the (i+1)^{th} initial biometric feature map in the video stream according to an order in which the initial biometric feature maps are acquired.

An objective of pre-processing the video stream is to identify, from the video stream, a plurality of biometric feature maps having strong action coherence of the biometric feature to form an action sequence, thereby ensuring continuity of the change in features of the biometric feature between the plurality of biometric feature maps included in the action sequence. Therefore, a specific algorithm configured for pre-processing a video stream is not limited in the embodiments of this application. For example, in the embodiments of this application, a deep learning model is configured to determine whether a change in features of the biometric feature between two adjacent initial biometric feature maps in a video stream is continuous. That is, a trained deep learning model can learn and understand an action relationship of the biometric feature between different initial biometric feature maps, that is, determine whether an action presented by the biometric feature included in an initial biometric feature map is a next action of an action presented by the biometric feature included in a preceding adjacent initial biometric feature map. A model structure and type of the deep learning model are not limited in the embodiments of this application. For example, the deep learning model may include, but is not limited to, one or more of a long short-term memory (LSTM), an artificial neural network (ANN), a multilayer perceptron (MLP), and the like.

Further, the deep learning model may be deployed on the computer device 202 in the system shown in FIG. 2. In this implementation, after acquiring a video stream by using a dedicated action camera, the computer device 201 may transmit the continuously acquired video stream to the computer device 202. The computer device 202 invokes the trained deep learning model to determine continuity between adjacent initial biometric feature maps included in the video stream. If a change in features of the biometric feature between two adjacent initial biometric feature maps is continuous, the two adjacent initial biometric feature maps may be archived for being conveniently added to an action sequence of the biometric feature, thereby ensuring continuity of a change in features of the biometric feature among a plurality of biometric feature maps included in the action sequence and integrity of the biometric feature included in the plurality of biometric feature maps (for example, the integrity is embodied as a change in features of the biometric feature reflected by the plurality of biometric feature maps being a change in features corresponding to executing a target action by the biometric feature). Conversely, if the change in features of the biometric feature between two initial biometric feature maps is discontinuous (for example, the change in features of the biometric feature between the i^{th} initial biometric feature map in the video stream and the (i+1)^{th} initial biometric feature map in the video stream is discontinuous), that is, an action interruption occurs, the (i+1)^{th} initial biometric feature map can be appropriately processed, to add the processed (i+1)^{th} initial biometric feature map to an interference data set. The interference data set includes an initial biometric feature map that is in the video stream and that has a discontinuous change in features of the biometric feature from a preceding adjacent initial biometric feature map. The interference data set may be used as interference data of the deep learning model in a model training process. In view of the above, an initial biometric feature map corresponding to an action interruption is cached into the interference data set after being subjected to appropriate processing (for example, labeling, regularization, and dimensionality reduction), and the interference data set is used as data for model training, so that the acquired initial biometric feature maps can be effectively utilized. This not only facilitates interference training of the deep learning model, but also avoids waste of an acquired initial biometric feature map. In addition, in the embodiments of this application, the video stream is pre-processed by using the deep learning model. The video stream can be automatically pre-processed with the help of a strong learning capability of the deep learning model, thereby improving quality and efficiency of the pre-processing while getting rid of manual pre-processing.

In conclusion, by using the video stream multi-feature map acquisition technology, a target action of a user can be continuously captured in real time, thereby ensuring coherence between initial biometric feature maps included in an acquired video stream. Further, it is further supported to determine continuity of a change in features of the biometric feature between adjacent initial biometric feature maps in the video stream, to construct an action sequence of the biometric feature, to ensure continuity, complementarity, and integrity of the biometric feature among a plurality of biometric feature maps included in the action sequence, thereby obtaining more redundant feature information of the user, and improving reliability and authenticity of the biometric feature.

S302: Perform feature extraction on each biometric feature map in a plurality of biometric feature maps, to obtain a feature vector of the biometric feature map.

S303: Fuse feature vectors of all the biometric feature maps in the plurality of biometric feature maps, to generate a fused feature vector.

In operations S302 and S303, after the action sequence of the biometric feature is obtained based on the foregoing operation S301, feature extraction and fusion may be respectively performed on all the biometric feature maps in the action sequence by using a continuous-feature map feature extraction and fusion module, to perform biometric feature extraction and fusion by using a plurality of continuous biometric feature maps, to further improve accuracy and reliability of recognition of the biometric feature. Feature extraction and fusion for the biometric feature maps in the action sequence may include two parts, which are respectively: feature extraction for each biometric feature map in the action sequence and feature fusion for feature vectors of a plurality of biometric feature maps.
① Feature extraction on each biometric feature map in an action sequence aims to remove redundant information and noise from original data in the biometric feature map, thereby reducing a dimension of the data, which facilitates analysis of key features (such as colors, lines, and patterns) about the biometric feature in the biometric feature map, and improves data processing efficiency. Further, the feature extraction may further map the biometric feature map to a feature space, and express semantics of the biometric feature map in a vector form, to extract a feature vector representing a semantic feature of the biometric feature map. In the embodiments of this application, a type of an algorithm for performing feature extraction on a biometric feature map is not limited. For example, the embodiments of this application support training a deep learning model having a feature extraction function. After the deep learning model is trained, feature extraction can be performed on continuous biometric feature maps. The deep learning model having a feature extraction function may include, but is not limited to, a recurrent neural network (RNN), a convolutional neural network (CNN), a transformer network, and the like.
   The RNN is a neural network having a short-term memory capability. Neurons in the RNN not only can receive information from other neurons, but also can receive information from themselves, to form a network structure with a loop. The CNN is a feed forward neural network that includes convolution calculations, and is designed based on translation invariance of an image task (an object for image recognition has a same meaning at different positions). The transformer network is a neural network model based on an attention mechanism. The transformer network abandons a convolutional model structure, and achieves good performance by using only an attention mechanism and a feed forward neural network without using a sequence-aligned recurrent architecture. The attention mechanism is a problem-solving method provided by imitating human attention. In short, information to which attention needs to be paid is quickly identified from a large amount of information by imitating human attention, the attention mechanism is mainly configured to resolve a problem that it is difficult to obtain a proper vector representation when an inputted sequence of a time series model is long. An approach is to retain an intermediate result of the time series model, and learn the intermediate result by using a novel model and associate the intermediate result with an output, thereby achieving information filtering.
② Feature fusion (or referred to as fusion processing) on feature vectors of a plurality of biometric feature maps refers to a process of fusing the feature vectors of the plurality of biometric feature maps to form a more comprehensive and more accurate fused feature vector. Feature fusion aims to fuse complete and abundant feature information extracted from all biometric feature maps included in an action sequence, to obtain a fused feature vector that can represent important information of all the biometric feature maps. The fused feature vector obtained after fusion may include more comprehensive and abundant information about the biometric feature, to improve reliability and accuracy of the biometric feature, thereby improving performance of biometric feature recognition. A feature fusion method for feature vectors of a plurality of biometric feature maps in an action sequence may include, but is not limited to, feature concatenation, feature weighting, or the like. The feature concatenation refers to directly performing feature concatenation on feature vectors of a plurality of biometric feature maps. For example, dimensions of feature vectors of two biometric feature maps are respectively p and q, and then a dimension of a feature vector obtained after the feature concatenation is p+q. Feature weighting refers to adding weights to feature vectors of a plurality of biometric feature maps, to implement weighted processing on the feature vectors of the plurality of biometric feature maps. For example, if feature vectors of two biometric feature maps are respectively p and q, a feature vector after feature weighting may be represented as z=xp+yq, where z is a fused feature vector, x is a weight value of a feature vector p of one biometric feature map, and y is a weight value of a feature vector q of the other biometric feature map.

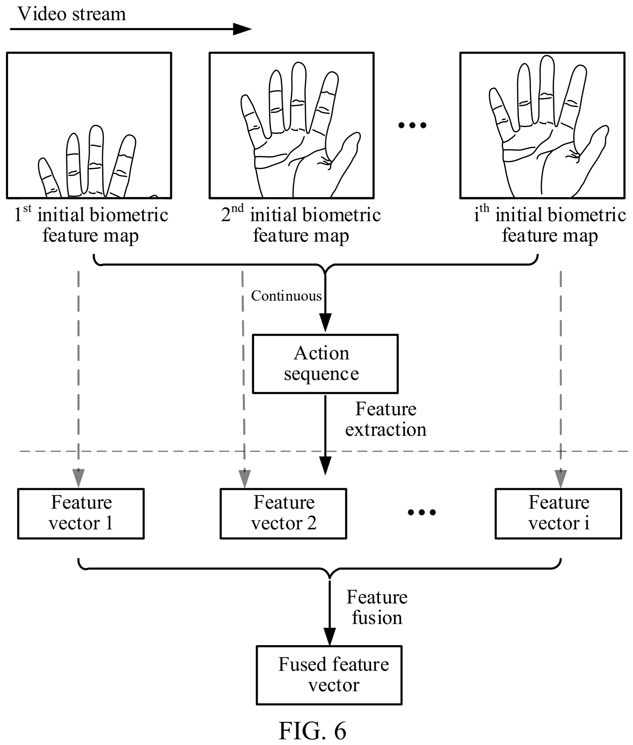

In conclusion, for an overall general procedure in which the continuous-feature map feature extraction and fusion module performs feature extraction and fusion on the plurality of biometric feature maps in the action sequence, reference may be made to FIG. 6. The procedure may include: performing feature extraction on each biometric feature map in the plurality of biometric feature maps in the action sequence in a serial or parallel manner (for example, performing feature extraction on each biometric feature map by using a deep learning model having a feature extraction function), to extract a feature vector of the biometric feature map, the feature vector of the biometric feature map being configured to represent partial information of the biometric feature in the single biometric feature map from a semantic dimension of the single biometric feature map; and performing feature fusion (for example, the foregoing fusion method such as feature concatenation or feature weighting) on feature vectors of all the biometric feature maps in the plurality of biometric feature maps in the action sequence, to generate a fused feature vector, the fused feature vector representing comprehensive feature information of the biometric feature by using complementarity (or vividness or superposition) of the biometric feature among the plurality of continuous biometric feature maps in the action sequence. In view of this, by fusing feature information of all biometric feature maps in an action sequence represented by feature vectors, performance and robustness of the feature recognition module can be improved, to enhance capabilities of recognizing and authenticating an individual.

S304: Perform identity recognition on the biometric feature based on the fused feature vector to obtain a recognition result.

After the fused feature vector of the biometric feature is obtained based on the foregoing operations, identity recognition may be performed, based on the fused feature vector, on an identity to which the biometric feature belongs, to recognize the identity to which the biometric feature belongs, thereby recognizing a personal identity. The feature recognition module provided in the embodiments of this application processes and analyzes the inputted fused feature vector by using a feature comparison algorithm and by relying on biometric feature comparison and matching technologies, to determine a similarity between the fused feature vector and an existing candidate biometric feature in a biometric feature data set (for example, the foregoing database), thereby implementing identity recognition and matching based on the biometric feature.

In conclusion, in the embodiments of this application, after a video stream is obtained by acquiring, in real time and continuously, a target action executed by a user, the video stream may be pre-processed, to obtain an action sequence having strong continuity. In this way, feature extraction and fusion are performed on a plurality of biometric feature maps in the action sequence, to obtain more comprehensive and abundant feature information of the biometric feature, thereby enhancing a subsequent capability of the feature recognition model to perceive an individual difference. Specifically, ① feature fusion on a plurality of continuous biometric feature maps can reduce impact of noise and a change caused by a single biometric feature map, and improve system robustness (that is, when some biometric feature maps are interfered or have poor quality, features of other biometric feature maps can still make up for them and provide reliable recognition information). ② Feature fusion on a plurality of continuous biometric feature maps can improve one-to-one matching performance. Specifically, feature fusion on a plurality of continuous biometric feature maps can provide more comprehensive and accurate feature information, thereby better capturing details and uniqueness of the biometric feature, and improving accuracy of subsequent biometric feature comparison. ③ Feature fusion on a plurality of continuous biometric feature maps can further improve a one-to-many search effect. Specifically, in a one-to-many identity recognition process, feature fusion on a plurality of continuous biometric feature maps can provide more redundant feature information, enhance a capability of distinguishing a biometric feature by the feature recognition module, improve a search effect of the feature recognition module in a large-scale database, and reduce an error rate. ④ A continuous-feature map acquisition technology based on a video stream enables the embodiments of this application to support dynamic biometric feature recognition. Specifically, feature fusion on a plurality of continuous biometric feature maps enables the feature recognition module to recognize a dynamic biometric feature, that is, in a process in which a continuous action is executed on the biometric feature, the feature recognition module can capture a temporal change pattern of the biometric feature, thereby accurately recognizing the dynamic biometric feature.

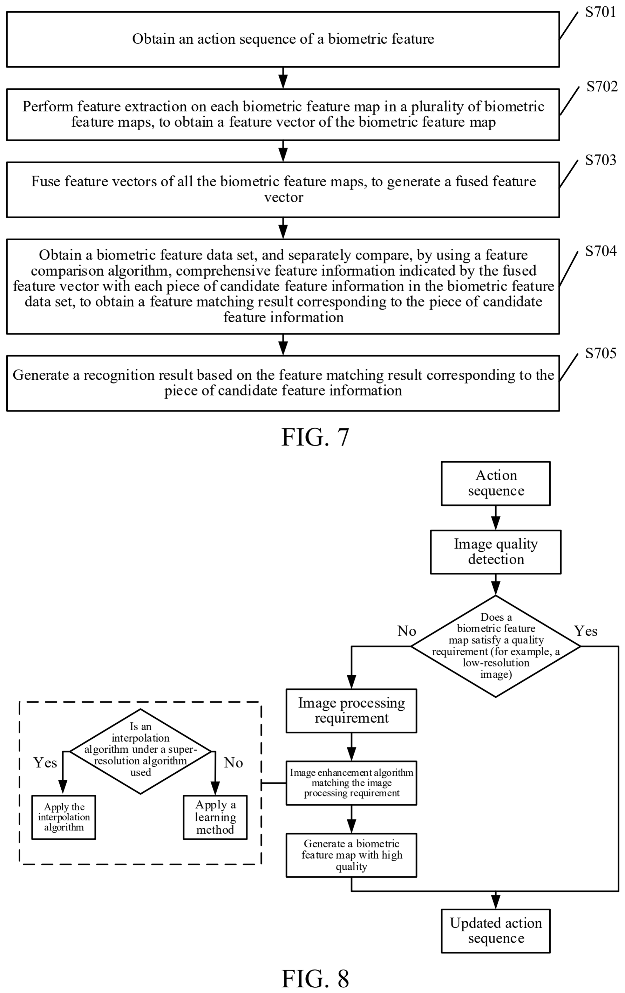

FIG. 7 is a schematic flowchart of another identity recognition method according to an exemplary embodiment of this application. The identity recognition method shown in FIG. 7 may be performed by a computer device, and the identity recognition method may include, but is not limited to, operations S701 to S705.

S701: Obtain an action sequence of a biometric feature.

For a specific implementation process of operation S701, reference may be made to the related descriptions of the specific implementation process of operation S301 in the embodiment shown in FIG. 3. Details are not described herein again.

It can be learned from the foregoing descriptions that, the plurality of continuous biometric feature maps included in the action sequence of the biometric feature are some initial biometric feature maps identified from a video stream. To improve image quality of the biometric feature maps included in the action sequence, to increase accuracy of identity recognition, the embodiments of this application further support performing image enhancement on a biometric feature map in the action sequence to improve image quality, which is beneficial to extracting more real and accurate feature information of the biometric feature based on a high-quality biometric feature map, thereby improving a capability of perceiving an individual identity.

A process of performing quality optimization on a biometric feature map in an action sequence is described below with reference to FIG. 8. As shown in FIG. 8, after the action sequence of the biometric feature is obtained, image quality detection is performed on each biometric feature map in the action sequence, to obtain a quality detection result of the biometric feature map. For example, resolution detection is performed on the biometric feature map. Lower resolution of the biometric feature map indicates lower definition of the biometric feature map, and higher resolution of the biometric feature map indicates higher definition of the biometric feature map. A specific algorithm and process of the image quality detection are not limited in the embodiments of this application. It is determined, according to the quality detection result of a biometric feature map, whether image enhancement processing needs to be performed on the biometric feature map. Specifically, a biometric feature map whose quality detection result does not satisfy a quality requirement is identified from the action sequence. For example, some biometric feature maps whose resolution is lower than a resolution threshold are identified from the action sequence as biometric feature maps whose quality detection results do not satisfy the quality requirement. Image enhancement is performed on the biometric feature map whose quality detection result does not satisfy the quality requirement, to obtain an enhanced biometric feature map after the image enhancement. In addition, a biometric feature map whose quality detection result satisfies the quality requirement is configured for subsequent feature extraction. Image enhancement may be simply understood as a process of making an originally unclear image clear or emphasizing an interesting feature in an image, enlarging a difference between features of different identities in an image, and improving image quality and enriching information, to enhance image interpretation and recognition effects. An image enhancement algorithm for image enhancement is not limited in the embodiments of this application.

For example, the embodiments of this application support personalized selection of appropriate image enhancement algorithms for different biometric feature maps according to an image processing requirement of each biometric feature map requiring image enhancement. Image quality of a single biometric feature map after image enhancement is improved by matching an image processing requirement of the biometric feature map with an image enhancement algorithm. During specific implementation, using an example in which any biometric feature map whose quality detection result in the action sequence does not satisfy a quality requirement is represented as a target biometric feature map, a process of performing image enhancement on the biometric feature map whose quality detection result does not satisfy the quality requirement may include, but is not limited to: obtaining an image processing requirement of the target biometric feature map, and selecting an image enhancement algorithm matching the image processing requirement; and performing image enhancement on the target biometric feature map by using the image enhancement algorithm matching the image processing requirement, to obtain the enhanced biometric feature map after the image enhancement. That the image processing requirement matches the image enhancement algorithm may mean that a result obtained by performing image enhancement on the biometric feature map by using the image enhancement algorithm can satisfy the image processing requirement. For example, if the image processing requirement of the target biometric feature map is enhancing high-frequency information in the enhanced target biometric feature map, the image enhancement algorithm matching the image processing requirement of the target biometric feature map may include, but is not limited to, an interpolation algorithm and a learning algorithm of super-resolution algorithms. The super-resolution technology is a technology that improves image resolution by using an image processing algorithm, and can restore a clearer and more detailed high-resolution image from a low-resolution image, thereby improving image quality and recognition accuracy. In detail, the super-resolution technology usually relates to two key principles: an interpolation method and a learning method. The interpolation method is a basic principle in the super-resolution technology. By performing pixel interpolation on the low-resolution image, missing high-frequency details are inferred according to information about neighboring pixels. Common interpolation methods include bilinear interpolation, bicubic interpolation, and the like. The learning method is a more advanced principle in the super-resolution technology. A deep learning model is configured to learn a mapping relationship between a low-resolution image and a high-resolution image, and by training the model, the deep learning model can learn a more accurate detail restoration manner, thereby generating a high-resolution image with high quality. Certainly, in addition to the super-resolution algorithm, the image enhancement algorithm configured for performing image enhancement on the biometric feature map may further include another algorithm (such as a grayscale change algorithm or a histogram), which is not limited.

Further, the action sequence of the biometric feature is updated by using the enhanced biometric feature map after the image enhancement to obtain an updated target action sequence. The updated target action sequence includes the enhanced biometric feature map after the image enhancement and a biometric feature map whose quality detection result satisfies the quality requirement. Specifically, a biometric feature map whose quality detection result does not satisfy the quality requirement is deleted from the action sequence of the biometric feature, and an enhanced biometric feature map after the corresponding image enhancement is inserted into the action sequence according to an arrangement position of the biometric feature map whose quality detection result does not satisfy the quality requirement in the action sequence, to obtain the updated target action sequence.

In view of the above, in the embodiments of this application, the acquired biometric feature map is processed by using an image enhancement algorithm (for example, the super resolution technology), to improve details and definition of an image, so that the enhanced biometric feature map after the enhancement is clearer, and missing details in the biometric feature map are restored, to help subsequently extracting more accurate and detailed feature information of the biometric feature from high-quality biometric feature maps, thereby improving the recognition performance for the biometric feature.

S702: Perform feature extraction on each biometric feature map in a plurality of biometric feature maps, to obtain a feature vector of the biometric feature map.

S703: Fuse feature vectors of all the biometric feature maps in the plurality of biometric feature maps, to generate a fused feature vector.

For a specific implementation process of operations S702 and S703, reference may be made to the related descriptions of the specific implementation process of operations S302 and S303 in the embodiment shown in FIG. 3. Details are not described herein again.

S704: Obtain a biometric feature data set (also referred to as biometric object data set), and individually compare, by using a feature comparison algorithm, comprehensive feature information indicated by the fused feature vector with each piece of candidate feature information in the biometric feature data set, to obtain a feature comparison result corresponding to the piece of candidate feature information.

S705: Generate a recognition result based on the feature comparison result corresponding to the piece of candidate feature information.

In operations S704 and S705, after the fused feature vector of the plurality of biometric feature maps in the action sequence is obtained based on the foregoing operations, identity recognition is performed on the biometric feature based on the fused feature vector from feature dimensions, such as a form and texture, of the biometric feature, to confirm and authenticate a personal identity. Identity recognition is performed on the biometric feature depending on the comprehensive feature information of the biometric feature indicated by the fused feature vector, which not only improves accuracy of a recognition result obtained through recognition, but also makes recognition of the personal identity unique, stable, and highly reliable.

During specific implementation: (1) A biometric feature data set is first obtained, the biometric feature data set including candidate feature information of biometric features of different identities. That is, the biometric feature data set is a database that pre-stores real biometric features of a large quantity of users. In this way, when identity recognition of a user needs to be performed, identity recognition and matching may be performed based on a real database.

(2) Comprehensive feature information indicated by the fused feature vector is individually compared with each piece of candidate feature information in the biometric feature data set by using a feature comparison algorithm, to obtain a feature comparison result corresponding to the piece of candidate feature information. The feature comparison algorithm may include, but is not limited to, a trained deep learning model or another pattern recognition algorithm. By using the feature comparison algorithm including a similarity algorithm and a distance comparison algorithm as an example, the following illustratively describes individually comparing (i.e., calculating the similarity between), by using a feature comparison algorithm, comprehensive feature information indicated by the fused feature vector with each piece of candidate feature information in the biometric feature data set, to obtain a feature comparison result corresponding to the piece of candidate feature information.

During specific implementation, similarity calculation may be individually performed, by using the similarity algorithm, on the comprehensive feature information indicated by the fused feature vector with each piece of candidate feature information in the biometric feature data set from a similarity dimension of image content between images, to obtain a similarity comparison result corresponding to the piece of candidate feature information. In addition, from a photographing distance dimension during image acquisition, distance indicator calculation (which calculates a distance indicator) may be performed, by using the distance comparison algorithm, on a first distance between the biometric feature corresponding to the fused feature vector and an capturing device when the biometric feature is acquired and a second distance corresponding to the piece of candidate feature information in the biometric feature data set, to obtain a distance indicator result corresponding to the piece of candidate feature information. The distance indicator result is configured to indicate a distance difference between the first distance and the second distance. The second distance corresponding to the candidate feature information refers to a distance between the candidate biometric feature corresponding to the candidate feature information and the capturing device when the candidate biometric feature is captured.

A feature comparison result corresponding to the piece of candidate feature information is generated based on the similarity comparison result and the distance indicator result that correspond to the piece of candidate feature information. Specifically, ① when the feature comparison result is a weighted value of the similarity comparison result and the distance indicator result, that the feature comparison result satisfies the matching condition includes: the weighted value is greater than a weighting threshold. For example, a feature comparison result corresponding to candidate feature information 1=a similarity comparison result corresponding to the candidate feature information 1 *20%+a distance indicator result corresponding to the candidate feature information 1 *80%. If the feature comparison result is greater than a weighting threshold, it is determined that the feature comparison result corresponding to the candidate feature information 1 satisfies a matching condition, that is, candidate feature information whose feature comparison result satisfies the matching condition exists in the biometric feature data set. ② When the feature comparison result includes the similarity comparison result and the distance indicator result, that the feature comparison result satisfies the matching condition includes: the similarity comparison result is greater than a similarity threshold, and the distance indicator result is greater than a distance difference threshold. For example, the feature comparison result corresponding to the candidate feature information 1 individually includes: a similarity comparison result corresponding to the candidate feature information 1 and a distance indicator result corresponding to the candidate feature information 1. If the similarity comparison result corresponding to the candidate feature information 1 is greater than the similarity threshold, and the distance indicator result corresponding to the candidate feature information 1 is greater than the distance difference threshold, it is determined that the feature comparison result corresponding to the candidate feature information 1 satisfies the matching condition. In view of the above, in the embodiments of this application, a feature comparison result corresponding to each piece of candidate feature information can be jointly generated by combining two dimensions: a similarity comparison result and a distance indicator result. Compared with predicting a feature comparison result based on a single-dimension indicator result, accuracy of the feature comparison result is improved to some extent, thereby improving accuracy of subsequent identity recognition.

(3) A recognition result is generated based on a feature comparison result corresponding to each piece of candidate feature information. According to the feature comparison result corresponding to the piece of candidate feature information, it can be determined that the recognition result indicating that candidate feature information whose feature comparison result satisfies a matching condition exists in the biometric feature data set, or the recognition result indicating that candidate feature information whose feature comparison result satisfies the matching condition does not exist in the biometric feature data set. For example, assuming that the candidate feature information whose feature comparison result satisfies the matching condition includes that a value of the feature comparison result is greater than a matching threshold 95%, if the biometric feature data set includes candidate feature information 1, candidate feature information 2, and candidate feature information 3, a feature comparison result between the candidate feature information 1 and the comprehensive feature information indicated by the fused feature vector is 10%, a feature comparison result between the candidate feature information 2 and the comprehensive feature information indicated by the fused feature vector is 96%, and a feature comparison result between the candidate feature information 3 and the comprehensive feature information indicated by the fused feature vector is 0.1%, it is determined that an identity to which candidate feature information 2 whose feature comparison result 96% is greater than 95% belongs is an object currently executing the target action for identity recognition. In this case, it is determined that candidate feature information whose feature comparison result satisfies a matching condition exists in the biometric feature data set.

When the recognition result indicates that candidate feature information whose feature comparison result satisfies the matching condition exists in the biometric feature data set, the recognition result may further include object information of an identity to which the biometric feature belongs. According to different requirements of service scenarios on object information of a user, the object information included in the recognition result is different. For example, in a scenario of purchasing a transportation ticket, the recognition result needs to include account information, vehicle number information, transaction information, and the like of an identity to which the biometric feature belongs. In another example, in a security access control scenario, the recognition result needs to include an object name of an identity to which the biometric feature belongs. Types and a quantity of pieces of object information specifically included in the recognition algorithm are not limited in the embodiments of this application.

In the embodiments of this application, a plurality of biometric feature maps can be continuously acquired in a process of executing a target action (for example, a palm swiping action/palm swiping behavior) by a user, and an all-round and comprehensive vector representation of a biometric feature is analyzed based on the plurality of biometric feature maps for identity recognition, which, compared with performing identity recognition based on a feature vector of a single biometric feature map, effectively improves accuracy and reliability of a biometric feature for identity recognition, thereby improving accuracy of identity recognition. In addition, performing image enhancement on the biometric feature map whose quality detection result does not satisfy the quality requirement in the action sequence is supported. Such a manner of selectively performing image enhancement on some biometric feature maps not only can save image processing resources, but also can ensure a high-resolution image of the biometric feature map in the action sequence, thereby further ensuring reliability of subsequent feature extraction, feature fusion, and recognition, and further improving personal identity recognition performance.

The method in the embodiments of this application is described in detail above. For ease of better implementing the foregoing solutions in the embodiments of this application, an apparatus in an embodiment of this application is correspondingly provided in the following.

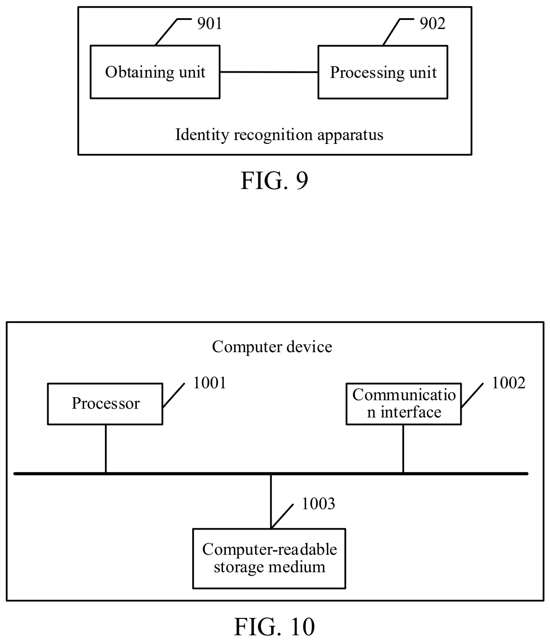

FIG. 9 is a schematic structural diagram of an identity recognition apparatus according to an exemplary embodiment of this application. The identity recognition apparatus may be configured to perform some or all of the operations in the method embodiments shown in FIG. 3 and FIG. 7. Referring to FIG. 9, the identity recognition apparatus includes following units:
an obtaining unit 901, configured to obtain an action sequence of a biometric feature, the action sequence including a plurality of biometric feature maps acquired continuously for the biometric feature, a change in features of the biometric feature between two adjacent biometric feature maps in the plurality of biometric feature maps being continuous; and
a processing unit 902, configured to perform feature extraction on each biometric feature map in the plurality of biometric feature maps, to obtain a feature vector of the biometric feature map, a feature vector of any biometric feature map representing sub-feature information of the biometric feature from a semantic dimension of the biometric feature map,
the processing unit 902 being further configured to fuse feature vectors of all the biometric feature maps to generate a fused feature vector, the fused feature vector representing comprehensive feature information of the biometric feature from a semantic dimension of the action sequence; and
the processing unit 902 being further configured to perform identity recognition on the biometric feature based on the fused feature vector to obtain a recognition result, the recognition result indicating an identity to which the biometric feature belongs.

In an implementation, when being configured to obtain an action sequence of a biometric feature, the obtaining unit 901 is specifically configured to:
perform continuous acquisition on a biometric feature executing a target action in a service scenario to obtain a video stream of the biometric feature, the video stream including a plurality of initial biometric feature maps continuously acquired, each initial biometric feature map including all or a part of the biometric feature; and
pre-process the plurality of initial biometric feature maps included in the video stream, to obtain the action sequence of the biometric feature,
the biometric feature map being a palm map of a palm of an object executing the target action, the biometric feature included in the biometric feature map being a palm print feature of the palm, and the service scenario being a long-distance palm swiping scenario.

In an implementation, the video stream includes N initial biometric feature maps, N being an integer greater than 1. When being configured to pre-process the plurality of initial biometric feature maps included in the video stream, to obtain the action sequence of the biometric feature, the processing unit 902 is specifically configured to:
determine whether a change in features of the biometric feature between an (i+1)^{th} initial biometric feature map in the video stream and an i^{th} initial biometric feature map in the video stream is continuous, 1≤i<N, and i being an integer;
if the change in features of the biometric feature between the (i+1)^{th} initial biometric feature map and the i^{th} initial biometric feature map in the video stream is continuous, add the (i+1)^{th} initial biometric feature map to the action sequence of the biometric feature, and determine whether the (i+1)^{th} initial biometric feature map is a last initial biometric feature map in the N initial biometric feature maps included in the video stream; and
if the (i+1)^{th} initial biometric feature map is not the last biometric feature map in the N initial biometric feature maps included in the video stream, continue determining whether a change in features of the biometric feature between an (i+2)^{th} initial biometric feature map and the (i+1)^{th} initial biometric feature map is continuous until a candidate biometric feature map in the video stream is detected,
the candidate biometric feature map including the last initial biometric feature map in the N initial biometric feature maps, or an initial biometric feature map that is in the N initial biometric feature maps and that has a discontinuous change in features of the biometric feature from a preceding adjacent initial biometric feature map.

In an implementation, the processing unit 902 is further configured to:
if the change in features of the biometric feature between the (i+1)^{th} initial biometric feature map in the video stream and the i^{th} initial biometric feature map in the video stream is discontinuous, determine the action sequence of the biometric feature, the action sequence including i initial biometric feature maps in the video stream, the i initial biometric feature maps being initial biometric feature maps located before the (i+1)^{th} initial biometric feature map in the video stream according to an order in which the initial biometric feature maps are acquired.

In an implementation, if a deep learning model is configured to determine whether the change in features of the biometric feature between the (i+1)^{th} initial biometric feature map in the video stream and the i^{th} initial biometric feature map in the video stream is continuous, the processing unit 902 is further configured to:
add the (i+1)^{th} initial biometric feature map to an interference data set,
the interference data set including an initial biometric feature map that is in the video stream and that has a discontinuous change in features of the biometric feature from a preceding adjacent initial biometric feature map; and the interference data set being used as interference data of the deep learning model during model training.

In an implementation, the processing unit 902 is further configured to:
perform image quality detection on each biometric feature map in the action sequence, to obtain a quality detection result of the biometric feature map;
identify, from the action sequence, a biometric feature map whose quality detection result does not satisfy a quality requirement;
perform image enhancement on the biometric feature map whose quality detection result does not satisfy the quality requirement, to obtain an enhanced biometric feature map after the image enhancement; and
update the action sequence of the biometric feature by using the enhanced biometric feature map to obtain an updated target action sequence, the target action sequence including the enhanced biometric feature map after the image enhancement and a biometric feature map whose quality detection result satisfies the quality requirement.

In an implementation, the biometric feature map whose quality detection result does not satisfy the quality requirement is represented as a target biometric feature map. When being configured to perform image enhancement on the biometric feature map whose quality detection result does not satisfy the quality requirement, to obtain an enhanced biometric feature map after the image enhancement, the processing unit 902 is specifically configured to:
obtain an image processing requirement of the target biometric feature map, and selecting an image enhancement algorithm matching the image processing requirement; and
perform image enhancement on the target biometric feature map by using the image enhancement algorithm matching the image processing requirement, to obtain the enhanced biometric feature map after the image enhancement.

If the image processing requirement is enhancing high-frequency information in the enhanced biometric feature map, the image enhancement algorithm matching the image processing requirement includes an interpolation algorithm and a learning algorithm of super-resolution algorithms.

In an implementation, when being configured to perform identity recognition on the biometric feature based on the fused feature vector to obtain a recognition result, the processing unit 902 is specifically configured to:
obtain a biometric feature data set, the biometric feature data set including candidate feature information of biometric features of different identities;
individually compare, by using a feature comparison algorithm, comprehensive feature information indicated by the fused feature vector with each piece of candidate feature information in the biometric feature data set, to obtain a feature comparison result corresponding to the piece of candidate feature information; and
generate a recognition result based on the feature comparison result corresponding to the piece of candidate feature information,
the recognition result indicating that candidate feature information whose feature comparison result satisfies a matching condition exists in the biometric feature data set, or the recognition result indicating that candidate feature information whose feature comparison result satisfies the matching condition does not exist in the biometric feature data set.

In an implementation, the feature comparison algorithm includes a similarity algorithm and a distance comparison algorithm. When being configured to individually compare, by using a feature comparison algorithm, comprehensive feature information indicated by the fused feature vector with each piece of candidate feature information in the biometric feature data set, to obtain a feature comparison result corresponding to the piece of candidate feature information, the processing unit 902 is specifically configured to:
individually perform, by using the similarity algorithm, similarity calculation on the comprehensive feature information indicated by the fused feature vector with the piece of candidate feature information in the biometric feature data set, to obtain a similarity comparison result corresponding to the piece of candidate feature information; and
perform, by using the distance comparison algorithm, distance indicator calculation on a first distance between the biometric feature corresponding to the fused feature vector and an capturing device when the biometric feature is acquired and a second distance corresponding to the piece of candidate feature information in the biometric feature data set, to obtain a distance indicator result corresponding to the piece of candidate feature information. The distance indicator result is configured to indicate a distance difference between the first distance and the second distance. The second distance corresponding to the candidate feature information refers to a distance between the biometric feature corresponding to the candidate feature information and the capturing device when the biometric feature is acquired.

A feature comparison result corresponding to the piece of candidate feature information is generated based on the similarity comparison result and the distance indicator result that correspond to the piece of candidate feature information.

In an implementation, when the feature comparison result is a weighted value of the similarity comparison result and the distance indicator result, that the feature comparison result satisfies the matching condition includes: the weighted value is greater than a weighting threshold; and
when the feature comparison result includes the similarity comparison result and the distance indicator result, that the feature comparison result satisfies the matching condition includes: the similarity comparison result is greater than a similarity threshold, and the distance indicator result is greater than a distance difference threshold.

According to an embodiment of this application, units of the identity recognition apparatus shown in FIG. 9 may be individually or wholly combined into one or a plurality of other units, or one (or more) of the units here may further be divided into the plurality of units of smaller functions. In this way, same operations can be implemented, and implementation of the technical effects of embodiments of this application is not affected. The foregoing units are divided based on logical functions. In an actual application, a function of one unit may also be implemented by a plurality of units, or functions of a plurality of units are implemented by one unit. In another embodiment of this application, the identity recognition apparatus may also include another unit. In actual application, these functions may alternatively be cooperatively implemented by another unit and may be cooperatively implemented by a plurality of units. According to another embodiment of this application, the identity recognition apparatus shown in FIG. 9 may be constructed and the identity recognition method in embodiments of this application may be implemented by running a computer program (including program code) that can perform the operations related to the corresponding methods shown in FIG. 2 and FIG. 7 on processing elements and memory elements including a central processing unit (CPU), a random access memory (RAM), a read-only memory (ROM), and the like, for example, a generic computing device of a computer. The computer program may be recorded on, for example, a computer-readable recording medium, and may be loaded into the foregoing computing device by using the computer-readable recording medium and run on the computing device.

In the embodiments of this application, continuous acquisition of a biometric feature of a user is supported, to obtain an action sequence of the biometric feature. The action sequence includes a plurality of biometric feature maps obtained by continuously acquiring the biometric feature, and in the plurality of biometric feature maps, a change in features of the biometric feature between any two adjacent biometric feature maps is continuous. In this way, feature extraction can be performed on the plurality of biometric feature maps in the action sequence, to obtain a feature vector of each biometric feature map. A feature vector of any biometric feature map expresses sub-feature information of the biometric feature from a semantic dimension of the biometric feature map. For example, if a biometric feature is a palm, and the palm in a biometric feature map is tilted, then a feature vector in the biometric feature map represents a palm print characteristic when the palm is tilted. Further, feature vectors of all the biometric feature maps are fused, to generate a fused feature vector. The fused feature vector represents comprehensive feature information of the biometric feature from a semantic dimension of the action sequence. Finally, identity recognition is performed based on the fused feature vector of the biometric feature to obtain a recognition result indicating an identity to which the biometric feature belongs. It can be learned from the foregoing solutions that in a novel biometric feature acquisition and recognition solution provided in the embodiments of this application, a plurality of biometric feature maps can be continuously acquired in a process of executing a target action (for example, a palm swiping action/palm swiping behavior) by a user, and an all-round and comprehensive vector representation of a biometric feature is analyzed based on the plurality of biometric feature maps for identity recognition, which, compared with performing identity recognition based on a feature vector of a single biometric feature map, effectively improves accuracy and reliability of a biometric feature for identity recognition, thereby improving accuracy of identity recognition.

FIG. 10 is a schematic structural diagram of a computer device according to an exemplary embodiment of this application. With reference to FIG. 10, the computer device includes a processor 1001, a communication interface 1002, and a computer-readable storage medium 1003. The processor 1001, the communication interface 1002, and the computer-readable storage medium 1003 are connected to each other by a bus or in another manner. The communication interface 1002 is configured to receive and send data. The computer-readable storage medium 1003 may be stored in a memory in a computer device. The computer-readable storage medium 1003 is configured to store a computer program, with the computer program including program instructions. The processor 1001 is configured to execute the program instructions stored in the computer-readable storage medium 1003. The processor 1001 (or referred to as a central processing unit (CPU)) is a computing core and a control core of the computer device, is configured to implement one or more instructions, and is specifically configured to load and execute the one or more instructions to implement a corresponding method flow or a corresponding function.

An embodiment of this application further provides a computer-readable storage medium (memory). The computer-readable storage medium is a memory device in a computer device, and is configured to store a program and data. The computer-readable storage medium herein may include both a storage medium built in the computer device and certainly an extended storage medium supported by the computer device. The computer-readable storage medium provides storage space storing a processing system of the computer device. In addition, one or more instructions that are loaded and executed by the processor 1001 are also stored in the storage space. These instructions may be one or more computer programs (including program code). The computer-readable storage medium herein may be a high-speed RAM memory, or may be a non-volatile memory, such as at least one magnetic disk storage. In one embodiment, the computer storage medium may be at least one computer-readable storage medium far away from the foregoing processor.

In an embodiment, the computer-readable storage medium stores one or more instructions. The processor 1001 loads and executes one or more instructions stored in the computer-readable storage medium, to implement corresponding steps the foregoing embodiments of the identity recognition method. During specific implementation, the one or more instructions in the computer-readable storage medium are loaded by the processor 1001 to further perform the following operations:
obtaining an action sequence of a biometric feature, the action sequence including a plurality of biometric feature maps acquired continuously for the biometric feature, a change in features of the biometric feature between two adjacent biometric feature maps in the plurality of biometric feature maps being continuous; and
performing feature extraction on each biometric feature map in a plurality of biometric feature maps, to obtain a feature vector of the biometric feature map, a feature vector of any biometric feature map representing sub-feature information of the biometric feature from a semantic dimension of the biometric feature map;
fusing feature vectors of all the biometric feature maps to generate a fused feature vector; and the fused feature vector representing comprehensive feature information of the biometric feature from a semantic dimension of the action sequence; and
performing identity recognition on the biometric feature based on the fused feature vector to obtain a recognition result, the recognition result indicating an identity to which the biometric feature belongs.

In an implementation, when being loaded by the processor 1001 and obtaining an action sequence of a biometric feature, the one or more instructions in the computer-readable storage medium specifically perform the following operations:
performing continuous acquisition on a biometric feature executing a target action in a service scenario to obtain a video stream of the biometric feature, the video stream including a plurality of initial biometric feature maps continuously acquired, each initial biometric feature map including all or a part of the biometric feature; and
pre-processing the plurality of initial biometric feature maps included in the video stream, to obtain the action sequence of the biometric feature,
the biometric feature map being a palm map of a palm of an object executing the target action, the biometric feature included in the biometric feature map being a palm print feature of the palm, and the service scenario being a long-distance palm swiping scenario.

In an implementation, the video stream includes N initial biometric feature maps, N being an integer greater than 1. When being loaded by the processor 1001 and pre-processing the plurality of initial biometric feature maps included in the video stream, to obtain the action sequence of the biometric feature, the one or more instructions in the computer-readable storage medium specifically perform the following operations:
determining whether a change in features of the biometric feature between an (i+1)^{th} initial biometric feature map in the video stream and an i^{th} initial biometric feature map in the video stream is continuous, 1≤i<N, and i being an integer;
if the change in features of the biometric feature between the (i+1)^{th} initial biometric feature map and the i^{th} initial biometric feature map in the video stream is continuous, adding the (i+1)^{th} initial biometric feature map to the action sequence of the biometric feature, and determine whether the (i+1)^{th} initial biometric feature map is a last initial biometric feature map in the N initial biometric feature maps included in the video stream; and
if the (i+1)^{th} initial biometric feature map is not the last biometric feature map in the N initial biometric feature maps included in the video stream, continuing determining whether a change in features of the biometric feature between an (i+2)^{th} initial biometric feature map and the (i+1)^{th} initial biometric feature map is continuous until a candidate biometric feature map in the video stream is detected,
the candidate biometric feature map including the last initial biometric feature map in the N initial biometric feature maps, or an initial biometric feature map that is in the N initial biometric feature maps and that has a discontinuous change in features of the biometric feature from a preceding adjacent initial biometric feature map.

In an implementation, the one or more instructions in the computer-readable storage medium are loaded by the processor 1001 and further perform the following operation:
if the change in features of the biometric feature between the (i+1)^{th} initial biometric feature map in the video stream and the i^{th} initial biometric feature map in the video stream is discontinuous, determining the action sequence of the biometric feature, the action sequence including i initial biometric feature maps in the video stream, the i initial biometric feature maps being initial biometric feature maps located before the (i+1)^{th} initial biometric feature map in the video stream according to an order in which the initial biometric feature maps are acquired.

In an implementation, if a deep learning model is configured to determine whether the change in features of the biometric feature between the (i+1)^{th} initial biometric feature map in the video stream and the i^{th} initial biometric feature map in the video stream is continuous, the one or more instructions in the computer-readable storage medium are loaded by the processor 1001 and further perform the following operation:
adding the (i+1)^{th} initial biometric feature map to an interference data set,
the interference data set including an initial biometric feature map that is in the video stream and that has a discontinuous change in features of the biometric feature from a preceding adjacent initial biometric feature map; and the interference data set being used as interference data of the deep learning model during model training.

In an implementation, the one or more instructions in the computer-readable storage medium are loaded by the processor 1001 and further perform the following operations:
performing image quality detection on each biometric feature map in the action sequence, to obtain a quality detection result of the biometric feature map;
identifying, from the action sequence, a biometric feature map whose quality detection result does not satisfy a quality requirement;
performing image enhancement on the biometric feature map whose quality detection result does not satisfy the quality requirement, to obtain an enhanced biometric feature map after the image enhancement; and
updating the action sequence of the biometric feature by using the enhanced biometric feature map to obtain an updated target action sequence, the target action sequence including the enhanced biometric feature map after the image enhancement and a biometric feature map whose quality detection result satisfies the quality requirement.

In an implementation, the biometric feature map whose quality detection result does not satisfy the quality requirement is represented as a target biometric feature map. When being loaded by the processor 1001 and performing image enhancement on the biometric feature map whose quality detection result does not satisfy the quality requirement, to obtain an enhanced biometric feature map after the image enhancement, the one or more instructions in the computer-readable storage medium specifically perform the following operations:
obtaining an image processing requirement of the target biometric feature map, and selecting an image enhancement algorithm matching the image processing requirement; and
performing image enhancement on the target biometric feature map by using the image enhancement algorithm matching the image processing requirement, to obtain the enhanced biometric feature map after the image enhancement.

If the image processing requirement is enhancing high-frequency information in the enhanced biometric feature map, the image enhancement algorithm matching the image processing requirement includes an interpolation algorithm and a learning algorithm of super-resolution algorithms.

In an implementation, when being loaded by the processor 1001 and performing identity recognition on the biometric feature based on the fused feature vector to obtain a recognition result, the one or more instructions in the computer-readable storage medium specifically perform the following operations:
obtaining a biometric feature data set, the biometric feature data set including candidate feature information of biometric features of different identities;
individually comparing, by using a feature comparison algorithm, comprehensive feature information indicated by the fused feature vector with each piece of candidate feature information in the biometric feature data set, to obtain a feature comparison result corresponding to the piece of candidate feature information; and
generating a recognition result based on the feature comparison result corresponding to the piece of candidate feature information,
the recognition result indicating that candidate feature information whose feature comparison result satisfies a matching condition exists in the biometric feature data set, or the recognition result indicating that candidate feature information whose feature comparison result satisfies the matching condition does not exist in the biometric feature data set.

In an implementation, the feature comparison algorithm includes a similarity algorithm and a distance comparison algorithm. When being loaded by the processor 1001 and individually comparing, by using a feature comparison algorithm, comprehensive feature information indicated by the fused feature vector with each piece of candidate feature information in the biometric feature data set, to obtain a feature comparison result corresponding to the piece of candidate feature information, the one or more instructions in the computer-readable storage medium specifically perform the following operations:
individually performing, by using the similarity algorithm, similarity calculation on the comprehensive feature information indicated by the fused feature vector with the piece of candidate feature information in the biometric feature data set, to obtain a similarity comparison result corresponding to the piece of candidate feature information; and
performing, by using the distance comparison algorithm, distance indicator calculation on a first distance between the biometric feature corresponding to the fused feature vector and an capturing device when the biometric feature is acquired and a second distance corresponding to the piece of candidate feature information in the biometric feature data set, to obtain a distance indicator result corresponding to the piece of candidate feature information. The distance indicator result is configured to indicate a distance difference between the first distance and the second distance. The second distance corresponding to the candidate feature information refers to a distance between the biometric feature corresponding to the candidate feature information and the capturing device when the biometric feature is acquired.

A feature comparison result corresponding to the piece of candidate feature information is generated based on the similarity comparison result and the distance indicator result that correspond to the piece of candidate feature information.

In an implementation, when the feature comparison result is a weighted value of the similarity comparison result and the distance indicator result, that the feature comparison result satisfies the matching condition includes: the weighted value is greater than a weighting threshold; and
when the feature comparison result includes the similarity comparison result and the distance indicator result, that the feature comparison result satisfies the matching condition includes: the similarity comparison result is greater than a similarity threshold, and the distance indicator result is greater than a distance difference threshold.

Based on the same inventive concept, the problem-solving principle and beneficial effects of the computer device provided in this embodiment of this application are similar to those of the identity recognition method in the method embodiments of this application. Refer to the principle and beneficial effects of the implementation of the method. For brevity, details are not described herein again.

The embodiments of this application further provide a computer program product or a computer program. The computer program product or the computer program includes computer instructions, and the computer instructions are stored in a non-transitory computer-readable storage medium. A processor of a computer device reads the computer instructions from the computer-readable storage medium, and the processor executes the computer instructions, to enable the computer device to perform the identity recognition method.

A person of ordinary skill in the art may be aware that, in combination with the examples described in embodiments disclosed in this application, units and algorithm operations may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but such implementation is not to be considered as going beyond the scope of this application.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable device. The computer instructions may be stored in a computer-readable storage medium or transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium capable of being accessed by a computer or include one or more data processing devices integrated by an available medium, such as a server and a data center. The usable medium may be a magnetic medium (for example, a floppy disk, a hard disk, or a magnetic tape), an optical medium (for example, a DVD), a semiconductor medium (for example, a solid state disk (SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An identity recognition method, performed by a computer device, the method comprising:
obtaining a feature map sequence of a biometric object performing an action, the feature map sequence comprising a plurality of biometric feature maps of the biometric object, a change of the biometric object between two adjacent biometric feature maps in the plurality of biometric feature maps being continuous;
performing feature extraction on each of the plurality of biometric feature maps to obtain a corresponding feature vector representing the biometric object from a plurality of semantic dimensions of the respective biometric feature map, each semantic dimension of the feature vector corresponding to a quantitative description of a pre-defined attribute of the biometric feature map;
fusing feature vectors of the plurality of biometric feature maps to generate a fused feature vector representing feature information of the biometric object from the plurality of semantic dimensions of the feature map sequence; and
performing identity recognition of the biometric object using the fused feature vector to obtain a recognition result indicating an identity of the biometric object.

2. The method according to claim 1, wherein the obtaining a feature map sequence of a biometric object comprises:
obtaining a video stream of the biometric object performing the action, the video stream comprising a plurality of initial biometric feature maps continuously captured, each of the plurality of initial biometric feature maps comprising all or part of features of the biometric object; and
pre-processing the plurality of initial biometric feature maps of the video stream to obtain the feature map sequence of the biometric object,
each biometric feature map being a palm map of a palm, biometric features comprised in each biometric feature map being palm print features of the palm, and the feature map sequence being obtained in a long-distance palm swiping scenario.

3. The method according to claim 1 or 2, wherein the video stream comprises N initial biometric feature maps, N being an integer greater than 1; and the pre-processing the plurality of initial biometric feature maps of the video stream to obtain the feature map sequence of the biometric object, comprises:
determining whether a change in features of the biometric object between an (i+1)^{th} initial biometric feature map in the video stream and an i^{th} initial biometric feature map in the video stream is continuous, 1≤i<N, and i being an integer;
when the change in features of the biometric object between the (i+1)^{th} initial biometric feature map and the i^{th} initial biometric feature map in the video stream is continuous, adding the (i+1)^{th} initial biometric feature map to the action sequence of the biometric object, and checking whether the (i+1)^{th} initial biometric feature map is a last initial biometric feature map in the N initial biometric feature maps of the video stream; and
when the (i+1)^{th} initial biometric feature map is not the last biometric feature map in the N initial biometric feature maps of the video stream, continuing determining whether a change in features of the biometric object between an (i+2)^{th} initial biometric feature map and the (i+1)^{th} initial biometric feature map is continuous until a candidate biometric feature map in the video stream is detected,
the candidate biometric feature map comprising the last initial biometric feature map in the N initial biometric feature maps, or an initial biometric feature map that is of the N initial biometric feature maps and that has a discontinuous change in features of the biometric object compared with a previous preceding adjacent initial biometric feature map.

4. The method according to any one of claims 1 to 3, further comprising:
when the change in features of the biometric object between the (i+1)^{th} initial biometric feature map in the video stream and the i^{th} initial biometric feature map in the video stream is discontinuous, determining the feature map sequence of the biometric feature, the feature map sequence comprising i initial biometric feature maps of the video stream, the i initial biometric feature maps being initial biometric feature maps preceding the (i+1)^{th} initial biometric feature map of the video stream according to an order in which the initial biometric feature maps are acquired.

5. The method according to any one of claims 1 to 4, wherein when whether the change in features of the biometric object between between the (i+1)^{th} initial biometric feature map of the video stream and the i^{th} initial biometric feature map of the video stream is continuous is determined by a deep learning model, the method further comprises:
adding the (i+1)^{th} initial biometric feature map into an interference data set,
the interference data set comprising an initial biometric feature map of the video stream and that has a discontinuous change in features of the biometric object compared with a preceding adjacent initial biometric feature map; and the interference data set being used as interference data of the deep learning model during model training .

6. The method according to any one of claims 1 to 5, further comprising:
performing image quality detection on each biometric feature map in the feature map sequence to obtain a quality detection result of the biometric feature map;
identifying, from the feature map sequence, a biometric feature map whose quality detection result does not satisfy a quality requirement;
performing image enhancement on the biometric feature map whose quality detection result does not satisfy the quality requirement, to obtain an enhanced biometric feature map after the image enhancement; and
updating the feature map sequence of the biometric object using the enhanced biometric feature map to obtain an updated feature map sequence, the updated action sequence comprising the enhanced biometric feature map after the image enhancement and at least one biometric feature map whose quality detection result satisfies the quality requirement.

7. The method according to any one of claims 1 to 6, wherein for a target biometric feature map whose quality detection result does not satisfy the quality requirement, the performing image enhancement on the biometric feature map whose quality detection result does not satisfy the quality requirement, to obtain an enhanced biometric feature map after the image enhancement, comprises:
obtaining an image processing requirement of the target biometric feature map, and selecting an image enhancement algorithm matching the image processing requirement; and
performing image enhancement on the target biometric feature map by using the image enhancement algorithm, to obtain the enhanced biometric feature map after the image enhancement,
when the image processing requirement is enhancing high-frequency information in the enhanced biometric feature map, the image enhancement algorithm matching the image processing requirement comprising an interpolation algorithm and a learning algorithm of super-resolution algorithms.

8. The method according to any one of claims 1 to 7, wherein the performing identity recognition of the biometric object using the fused feature vector to obtain a recognition result comprises:
obtaining a biometric object data set, the biometric object data set comprising candidate feature information of biometric objects of different identities;
comparing, using a feature comparison algorithm, feature information presented by the fused feature vector individually with each piece of candidate feature information in the biometric object data set to obtain a feature comparison result corresponding to each piece of the candidate feature information; and
generating a recognition result based on the feature comparison result corresponding to each piece of candidate feature information,
the recognition result indicating that there is candidate feature information whose feature comparison result satisfies a matching condition in the biometric object data set, or the recognition result indicating that there is no candidate feature information whose feature comparison result satisfies the matching condition in the biometric object data set.

9. The method according to any one of claims 1 to 8, wherein the feature comparison algorithm comprises a similarity algorithm and a distance comparison algorithm; and the comparing, using a feature comparison algorithm, feature information presented by the fused feature vector individually with each piece of candidate feature information in the biometric object data set to obtain a feature comparison result corresponding to each piece of candidate feature information comprises:
calculating, using the similarity algorithm, similarity between the comprehensive feature information presented by the fused feature vector individually with each piece of candidate feature information in the biometric object data set to obtain a similarity comparison result corresponding to each piece of candidate feature information; and
calculating, using the distance comparison algorithm, a distance indicator associated with a first distance between the biometric object corresponding to the fused feature vector and a capturing device when the biometric object is captured and a second distance corresponding to each piece of candidate feature information in the biometric object data set to obtain a distance indicator result corresponding to each piece of candidate feature information, the distance indicator result indicating a distance difference between the first distance and the second distance, the second distance corresponding to a piece of candidate feature information referring to a distance between a candidate biometric object corresponding to the piece of candidate feature information and a capturing device when the candidate biometric object is captured; and
generating a feature comparison result corresponding to each piece of the candidate feature information based on the similarity comparison result and the distance indicator result that correspond to each piece of the candidate feature information.

10. The method according to any one of claims 1 to 9, wherein when the feature comparison result is a weighted value of the similarity comparison result and the distance indicator result, that the feature comparison result satisfies the matching condition comprises: the weighted value is greater than a weighting threshold; and
when the feature comparison result comprises the similarity comparison result and the distance indicator result, that the feature comparison result satisfies the matching condition comprises: the similarity comparison result is greater than a similarity threshold, and the distance indicator result is greater than a distance difference threshold.

11. An identity recognition apparatus, configured in a computer device, the identity recognition apparatus comprising:
an obtaining unit, configured to obtain a feature map sequence of a biometric object performing an action, the feature map sequence comprising a plurality of biometric feature maps of the biometric object, a change in features between two adjacent biometric feature maps in the plurality of biometric feature maps being continuous; and
a processing unit, configured to perform feature extraction on each of the plurality of biometric feature maps to obtain a corresponding feature vector representing the biometric object from a plurality of semantic dimensions of the respective biometric feature map, each semantic dimension of the feature vector corresponding to a quantitative description of a pre-defined attribute of the biometric feature map,
the processing unit being further configured to fuse feature vectors of the plurality of biometric feature maps to generate a fused feature vector representing feature information of the biometric object from the plurality of semantic dimensions of the feature map sequence; and
the processing unit being further configured to perform identity recognition of the biometric object using the fused feature vector to obtain a recognition result indicating an identity of the biometric object.

12. A computer device, comprising:
a processor, adapted to execute a computer program; and
a computer-readable storage medium, having the computer program stored therein, the computer program, when executed by the processor, implementing the identity recognition method according to any one of claims 1 to 10.

13. A computer-readable storage medium, having a computer program stored therein, the computer program being configured to be loaded by a processor to perform the identity recognition method according to any one of claims 1 to 10.

14. A computer program product, comprising a computer program, the computer program, when executed by a processor, implementing the identity recognition method according to any one of claims 1 to 10.
